# EUROPEAN PATENT APPLICATION

(11) **EP 4 749 511 A1**
(43) Date of publication of application: **27.05.2026**
(21) Application number: 24902622.0
(22) Date of filing: 02.12.2024
(51) Int. Cl.: G06F 40/166

(54) **CONTENT PROCESSING METHOD, SYSTEM AND ELECTRONIC DEVICE**

(30) Priority: 12.12.2023 CN 202311705791
(71) Applicant: Huawei Technologies Co., Ltd., Shenzhen, Guangdong 518129 (CN)
(72) Inventor: JU, Ran, Shenzhen, Guangdong 518129 (CN); ZHOU, Yan, Shenzhen, Guangdong 518129 (CN); ZHOU, Xingchen, Shenzhen, Guangdong 518129 (CN)
(74) Representative: Goddar, Heinz J.
(86) International application number: PCT/CN2024/136112
(87) International publication number: WO 2025/124201

(57) **Abstract**

This application provides a content processing method and system, and an electronic device. In the method, after obtaining first content, first location information indicating a first location in the first content, and first task information indicating to execute a first processing task at the first location, the electronic device may input the first content, the first location information, and the first task information into a first model, so that the first model executes the first processing task at the first location based on a part or all of the first content other than the first location, to obtain second content. A part or all of the first content other than the first location may be used as context content of the first location. The electronic device performs task processing by using the first model and based on the context content, which helps improve accuracy of an output result when the first model executes a task. In this way, the output result more easily meets a task processing requirement, thereby improving practicability of the first model.

## Description

### CROSS-REFERENCE TO RELATED APPLICATIONS

This application claims priority to Chinese Patent Application No. 202311705791.3, filed with the China National Intellectual Property Administration on December 12, 2023 and entitled "CONTENT PROCESSING METHOD AND SYSTEM, AND ELECTRONIC DEVICE", which is incorporated herein by reference in its entirety.

### TECHNICAL FIELD

This application relates to the field of electronic device technologies, and in particular, to a content processing method and system, and an electronic device.

### BACKGROUND

An artificial intelligence (artificial intelligence, AI) model (or referred to as a large artificial intelligence model or a pre-trained large artificial intelligence model) is a model that can adapt to a series of tasks after large-scale data training. The AI model is a machine learning model. Currently, some AI models (for example, a generative AI model and a large language model) may execute a corresponding task based on input task indication information and output a task processing result; or the AI model may execute a corresponding task for input content based on the content and task indication information corresponding to the content and output a task processing result. However, in actual application, task execution effect of the AI model may be unstable. In some scenarios (for example, a complex task scenario), a task processing result output by the AI model may hardly meet a task processing requirement, resulting in low practicability of the AI model.

### SUMMARY

This application provides a content processing method and system, and an electronic device, to improve effect of processing a task by using a model, thereby improving practicability of the model.

According to a first aspect, an embodiment of this application provides a content processing method. The method includes: obtaining first content, first location information, and first task information, where the first location information indicates a first location in the first content, and the first task information indicates to execute a first processing task at the first location; and inputting the first content, the first location information, and the first task information into a first model, to determine second content, where the second content includes content obtained by the first model by executing the first processing task at the first location based on first reference content, and the first reference content includes a part or all of the first content other than the first location. Optionally, the first model is an AI model.

In the method, in the first content, the first reference content may be used as context content of the first location. An electronic device inputs the first content, the first location information, and the first task information into the first model, so that when executing, at the first location indicated by the first location information, the first processing task indicated by the first task information, the first model can perform task processing at the first location based on the context content of the first location, to obtain a more accurate processing result. Therefore, the method helps improve accuracy of an output result when the electronic device executes a task by using the first model. In this way, the output result more easily meets a task processing requirement, thereby improving practicability of the first model. When the first model is an AI model, the method can improve effect of processing a task by using the AI model, thereby improving practicability of the AI model.

In a possible design, the first content includes first sub-content, the first location is a location before or after the first sub-content, and the first reference content includes the first sub-content. In the method, the context content of the first location may be content at a location on any side of the first location, which is flexible and facilitates control of a data amount of the context content of the first location, thereby ensuring specific processing efficiency.

Optionally, if the first location is a location before the first sub-content, in content input into the first model, the first location information and the first task information are located before the first sub-content; or if the first location is a location after the first sub-content, in content input into the first model, the first location information and the first task information are located after the first sub-content. In the method, a location relationship between location information/task information and sub-content in the content input into the first model may be associated with a location relationship between a location corresponding to the location information and the sub-content in the first content, so that a consistency throughout a content conversion process can be improved. In addition, if the content input into the first model is displayed, readability of the displayed content input into the first model can be improved.

In a possible design, the first content further includes second sub-content, the first location is a location between the first sub-content and the second sub-content, and the first reference content further includes the second sub-content. In the method, the context content of the first location may be content at locations on two sides of the first location, which is comprehensive and helps improve accuracy of task processing.

Optionally, in the content input into the first model, the first location information and the first task information are located between the first sub-content and the second sub-content. In the method, a location relationship between location information/task information and sub-content in the content input into the first model may be associated with a location relationship between a location corresponding to the location information and the sub-content in the first content, so that a consistency throughout a content conversion process can be improved. In addition, if the content input into the first model is displayed, readability of the displayed content input into the first model can be improved.

In a possible design, the first content includes third sub-content, the third sub-content is located at the first location, and the second content specifically includes content obtained by the first model by executing the first processing task for the third sub-content based on the first reference content.

According to the method, at the first location in the first content, there may be the third sub-content, or there may be no sub-content. In other words, content is empty. Regardless of whether there is sub-content at the first location in the first content, the electronic device may perform accurate task processing at the first location based on the context content of the first location according to the method. Therefore, effect of performing task processing by using the first model in the method is good.

In a possible design, the first location information includes start location information and end location information, the start location information indicates a start point of the first location, the end location information indicates an end point of the first location, and the third sub-content is located between the start point and the end point in the first content.

In the method, a location of the third sub-content in the first sub-content can be clearly and accurately indicated based on the start location information and the end location information, so that the first model identifies the third sub-content and performs subsequent processing, thereby improving processing efficiency.

In a possible design, in content input into the first model, the third sub-content is located between the start location information and the end location information; and/or in the content input into the first model, the first task information is located before the start location information, or between the start location information and the third sub-content, or between the third sub-content and the end location information, or after the end location information.

In the method, a location relationship between start location information and end location information in the location information, the sub-content, the task information, and the like in the content input into the first model may be flexibly set. This can improve flexibility and practicability of the solution.

In a possible design, the method is applied to a server, and obtaining the first content, the first location information, and the first task information includes: receiving the first content, the first location information, and the first task information from a terminal device.

When the provided content processing method is applied to the server, the server may obtain, from the terminal device, content that needs to be input into the first model, namely, the first content, the first location information, and the first task information, and process the content by using the first model. Therefore, the method may be applied to a scenario in which the server performs, by using the first model, task processing on content provided by the terminal device, to avoid a task processing workload of the terminal device, and improve processing efficiency on a terminal device side.

In a possible design, obtaining the first content, the first location information, and the first task information includes: obtaining the first content and first indication information, where the first indication information indicates to execute the first processing task at the first location in the first content; and determining the first location information and the first task information based on the first content and the first indication information.

The first indication information may be used by the electronic device to identify or determine the first location and the first processing task, and the first location information and the first task information may be respectively used by the first model to identify or determine the first location and the first processing task. The first location information and the first task information are determined based on the first content and the first indication information, so that location information and task information that may be identified by the electronic device can be converted into location information and task information that can be identified by the first model, and the first model performs corresponding processing, thereby improving processing efficiency of the first model and task execution accuracy.

In a possible design, after obtaining the first content and the first indication information, and before determining the first location information and the first task information based on the first content and the first indication information, the method further includes: displaying the first content and the first indication information; and receiving a first operation, where the first operation indicates to convert the first indication information into the first location information and the first task information based on the first content.

In the method, the electronic device may trigger conversion of indication information, namely, determining of location information and task information based on an operation performed by a user, so that the user controls a content processing process.

In a possible design, obtaining the first content and the first indication information includes: obtaining and displaying the first content by using a first application, and determining the first indication information based on a received second operation performed on the first content, where the second operation indicates the first indication information; or obtaining, by using a first application, the first content and the first indication information that are indicated by a received third operation; or receiving, by using a first application, the first content and the first indication information that are sent by a second application, where the second application is used to generate the first content and the first indication information.

Optionally, before receiving, by using the first application, the first content and the first indication information that are sent by the second application, the method further includes: obtaining and displaying the first content by using the second application, and determining the first indication information based on a received fourth operation performed on the first content.

The first application and the second application are applications installed in the electronic device. The electronic device may generate and display the first content by using the first application, the user may perform the second operation to edit the first content displayed by using the first application, and the first application of the electronic device may determine the first indication information based on the second operation. Alternatively, the user may perform a third operation such as a pasting operation, to directly indicate the first content and second indication information to the first application of the electronic device. Alternatively, the electronic device may generate the first content by using the second application, determine the first indication information based on an operation performed by the user on the first content, and may send the first content and the first indication information to the first application by using the second application. In the method, the electronic device may obtain the first content and the first indication information in different manners by using at least one application. Flexibility and practicability are high.

Optionally, inputting the first content, the first location information, and the first task information into the first model, to determine the second content includes: inputting the first content, the first location information, and the first task information into the first model by using the first application, to determine the second content. Optionally, before inputting the first content, the first location information, and the first task information into the first model by using the first application, to determine the second content, the method further includes: displaying the first content, the first location information, and the first task information by using the first application; and receiving a fifth operation by using the first application, where the fifth operation indicates to execute a processing task based on the first content, the first location information, and the first task information.

Content to be input into the first model, namely, the first content, the first location information, and the first task information, is displayed, so that the user can conveniently view the content input into the first model, and execution of a content processing task can be triggered based on a corresponding operation performed by the user. Therefore, it is convenient for the user to control the content processing process, thereby improving observability and controllability of the content processing process.

In a possible design, the method is applied to a terminal device.

In a possible design, before inputting the first content, the first location information, and the first task information into the first model, to determine the second content, the method further includes: obtaining second location information and second task information, where the second location information indicates a second location in the first content, and the second task information indicates to execute a second processing task at the second location; when the first content, the first location information, and the first task information are input into the first model, the method further includes: inputting the second location information and the second task information into the first model; and the second content further includes content obtained by the first model by executing the second processing task at the second location based on second reference content, and the second reference content includes a part or all of the first content other than the second location.

Based on the method, the electronic device may simultaneously process, by using the first model, a plurality of groups of tasks for the first content, for example, the first processing task and the second processing task, to achieve effect of simultaneously processing a plurality of tasks by using a same model. Therefore, the method may be applied to a scenario in which a plurality of tasks are simultaneously processed, to improve multi-task processing efficiency while processing effect of each of the plurality of tasks is ensured.

In a possible design, before inputting the first content, the first location information, and the first task information into the first model, to determine the second content, the method further includes: obtaining training data, where the training data includes third content, third location information, third task information, and fourth content, the third location information indicates a third location in the third content, the third task information indicates to execute a third processing task at the third location, and the fourth content includes content obtained by executing the third processing task at the third location based on a part or all of the third content other than the third location; and performing model training on a specified model based on the training data, to obtain the first model.

Based on the method, the electronic device may implement training of the first model used to process a single task.

In a possible design, obtaining the training data includes: obtaining the third content and second indication information, where the second indication information indicates to execute the third processing task at the third location in the third content; determining the third location information and the third task information based on the second indication information; inputting the third content and the second indication information into a second model, to determine fifth content; or inputting the content at the third location in the third content and the second indication information into a second model, to determine fifth content; or when there is no content at the third location, inputting the second indication information into a second model, to determine fifth content, where the fifth content includes content obtained by the second model by executing the third processing task based on input content; and determining the fourth content based on the fifth content.

Optionally, determining the fourth content based on the fifth content includes: using the fifth content as the fourth content; or in response to a received sixth operation, modifying the fifth content, to obtain the fourth content, where the sixth operation indicates to modify the fifth content to the fourth content. The second model may be a specified generative AI model.

The method for obtaining the training data may be applied to a scenario in which the first model used to process a single task is trained. According to the method, the electronic device may collect, by using the specified second model, a part that is of the training data and that is used as a task processing result. Content, namely, the fifth content, obtained by processing the second model based on a user operation is modified, so that accuracy of task processing result data in the training data can be improved through manual correction. Further, accuracy of model training performed based on the training data can be improved, to obtain the first model with good processing effect.

In a possible design, the training data further includes fourth location information and fourth task information, the fourth location information indicates a fourth location in the third content, and the fourth task information indicates to execute a fourth processing task at the fourth location; and the fourth content further includes content obtained by executing the fourth processing task at the fourth location based on a part or all of the third content other than the fourth location.

Based on the method, the electronic device may implement training of the first model used to process a plurality of tasks together.

In a possible design, obtaining the training data includes: obtaining the third content, second indication information, and third indication information, where the second indication information indicates to execute the third processing task at the third location in the third content, and the third indication information indicates to execute a fourth processing task at a fourth location in the third content; inputting the third content and the second indication information into a second model, to determine fifth content; or inputting the content at the third location in the third content and the second indication information into a second model, to determine fifth content; or inputting the second indication information into a second model, to determine fifth content, where the fifth content includes content obtained by the second model by executing the third processing task based on input content; or inputting the third content and the third indication information into the second model, to determine sixth content; or inputting the content at the fourth location in the third content and the third indication information into a second model, to determine sixth content; or inputting the third indication information into a second model, to determine sixth content, where the sixth content includes content obtained by the second model by executing the fourth processing task based on input content; and determining the fourth content based on the fifth content and the sixth content.

Optionally, determining the fourth content based on the fifth content and the sixth content includes: using, as the fourth content, content obtained by combining seventh content determined based on the fifth content and eighth content determined based on the sixth content, where the seventh content is the fifth content or content obtained by modifying the fifth content in response to a received operation, and the eighth content is the sixth content or content obtained by modifying the sixth content in response to a received operation.

The method for obtaining the training data may be applied to a scenario in which the first model used to process a plurality of tasks is trained. According to the method, the electronic device may collect, by using the specified second model, a part that is of the training data and that is used as a task processing result. Content, namely, the fifth content and the sixth content, obtained by processing the second model based on a user operation is modified, so that accuracy of task processing result data in the training data can be improved through manual correction. Further, accuracy of model training performed based on the training data can be improved, to obtain the first model with good processing effect.

In a possible design, performing model training on the specified model based on the training data, to obtain the first model includes: inputting the training data into the specified model, to determine ninth content, where the ninth content includes content obtained by the specified model by executing the third processing task at the third location in the third content; and adjusting the specified model based on the third content and the ninth content, to obtain the first model.

In the method, the electronic device may adjust the specified model based on a deviation between a task processing result with high accuracy, namely, the ninth content, and a task processing result obtained by using the specified model, namely, the third content, so that the task processing result of the specified model approaches an accurate task processing result, and further train the first model with good processing effect.

In a possible design, the ninth content further includes content obtained by the specified model by executing the fourth processing task at the fourth location in the third content. With reference to the method, the first model that has good processing effect and that is used to process a plurality of tasks may be obtained through training.

Optionally, the specified model is a model of a specified network structure or a specified generative AI model.

In a possible design, the first content includes at least one of the following: a text, an image, audio, a video, and code.

The first content in the method may include at least one type of content. Therefore, based on the method, single-task or multi-task processing for various types of content can be implemented, and a good task processing result can be obtained.

In a possible design, when the first content is a first image, the first location information is a semantic mask image corresponding to the content at the first location in the first image.

Semantic mask images can clearly and intuitively represent locations of different types of content in an image, which helps improve accuracy of location identification and task processing for the image.

In a possible design, the first model is a generative artificial intelligence AI model. The generative AI model can execute a generative task. The generative AI model is used in the method, to further extend a range of tasks that may be executed by the model, and improve a task execution capability of the model.

According to a second aspect, this application provides a content processing system. The content processing system includes a terminal device and a server; the terminal device is configured to send first content, first location information, and first task information to the server, where the first location information indicates a first location in the first content, and the first task information indicates to execute a first processing task at the first location; the server is configured to: receive the first content, the first location information, and the first task information from the terminal device; input the first content, the first location information, and the first task information into a first model, to determine second content, where the second content includes content obtained by the first model by executing the first processing task at the first location based on first reference content, and the first reference content includes a part or all of the first content other than the first location; and send the second content to the terminal device; and the terminal device is further configured to receive the second content from the server.

In the method, in the first content, the first reference content may be used as context content of the first location. The server inputs the first content, the first location information, and the first task information into the first model, so that when executing, at the first location indicated by the first location information, the first processing task indicated by the first task information, the first model can perform task processing at the first location based on the context content of the first location, to obtain a more accurate processing result. Therefore, the method helps improve accuracy of an output result when the server executes a task by using the first model. In this way, the output result more easily meets a task processing requirement, thereby improving practicability of the first model. When the first model is an AI model, the method can improve effect of processing a task by using the AI model, thereby improving practicability of the AI model. In addition, the terminal device sends the first content, the first location information, and the first task information to the server, and the server may execute a corresponding processing task based on the information and obtain a corresponding task processing result. The terminal device may obtain the task processing result from the server. Therefore, a workload of performing task processing on an electronic device side can be reduced or avoided, thereby improving overall processing efficiency on the electronic device side.

In a possible design, the first content includes first sub-content, the first location is a location before or after the first sub-content, and the first reference content includes the first sub-content.

Optionally, if the first location is a location before the first sub-content, in content input into the first model, the first location information and the first task information are located before the first sub-content; or if the first location is a location after the first sub-content, in content input into the first model, the first location information and the first task information are located after the first sub-content.

In a possible design, the first content further includes second sub-content, the first location is a location between the first sub-content and the second sub-content, and the first reference content further includes the second sub-content.

Optionally, in the content input into the first model, the first location information and the first task information are located between the first sub-content and the second sub-content.

In a possible design, the first content includes third sub-content, the third sub-content is located at the first location, and the second content specifically includes content obtained by the first model by executing the first processing task for the third sub-content based on the first reference content.

In a possible design, the first location information includes start location information and end location information, the start location information indicates a start point of the first location, the end location information indicates an end point of the first location, and the third sub-content is located between the start point and the end point in the first content.

In a possible design, in content input into the first model, the third sub-content is located between the start location information and the end location information; and/or in the content input into the first model, the first task information is located before the start location information, or between the start location information and the third sub-content, or between the third sub-content and the end location information, or after the end location information.

In a possible design, the terminal device is further configured to: before sending the first content, the first location information, and the first task information to the server, obtain the first content and first indication information, where the first indication information indicates to execute the first processing task at the first location in the first content; and determine the first location information and the first task information based on the first content and the first indication information.

In a possible design, the terminal device is further configured to: after obtaining the first content and the first indication information, and before determining the first location information and the first task information based on the first content and the first indication information, display the first content and the first indication information; and receive a first operation, where the first operation indicates to convert the first indication information into the first location information and the first task information based on the first content.

In a possible design, when obtaining the first content and the first indication information, the terminal device is specifically configured to: obtain and display the first content by using a first application, and determine the first indication information based on a received second operation performed on the first content, where the second operation indicates the first indication information; or obtain, by using a first application, the first content and the first indication information that are indicated by a received third operation; or receive, by using a first application, the first content and the first indication information that are sent by a second application, where the second application is used to generate the first content and the first indication information.

Optionally, the terminal device is further configured to: before receiving, by using the first application, the first content and the first indication information that are sent by the second application, obtain and display the first content by using the second application, and determine the first indication information based on a received fourth operation performed on the first content.

Optionally, when sending the first content, the first location information, and the first task information to the server, the terminal device is specifically configured to send the first content, the first location information, and the first task information to the server by using the first application.

In a possible design, the terminal device is further configured to: receive the third operation before sending the first content, the first location information, and the first task information to the server, where the third operation indicates to execute a processing task based on the first content, the first location information, and the first task information. Optionally, the terminal device is further configured to display the first content, the first location information, and the first task information before receiving the third operation.

In a possible design, the terminal device is further configured to send second location information and second task information to the server, where the second location information indicates a second location in the first content, and the second task information indicates to execute a second processing task at the second location; the server is further configured to: when the first content, the first location information, and the first task information are input into the first model, input the second location information and the second task information into the first model; and the second content further includes content obtained by the first model by executing the second processing task at the second location based on second reference content, and the second reference content includes a part or all of the first content other than the second location.

In a possible design, the server is further configured to: before inputting the first content, the first location information, and the first task information into the first model, to determine the second content, obtain training data, and perform model training on a specified model based on the training data, to obtain the first model, where the training data includes third content, third location information, third task information, and fourth content, the third location information indicates a third location in the third content, the third task information indicates to execute a third processing task at the third location, and the fourth content includes content obtained by executing the third processing task at the third location based on a part or all of the third content other than the third location.

In a possible design, when obtaining the training data, the server is specifically configured to: obtain the third content and second indication information, where the second indication information indicates to execute the third processing task at the third location in the third content; determine the third location information and the third task information based on the second indication information; input the third content and the second indication information into a second model, to determine fifth content; or input the content at the third location in the third content and the second indication information into a second model, to determine fifth content; or when there is no content at the third location, input the second indication information into a second model, to determine fifth content, where the fifth content includes content obtained by the second model by executing the third processing task based on input content; and determine the fourth content based on the fifth content.

Optionally, when determining the fourth content based on the fifth content, the server is specifically configured to: use the fifth content as the fourth content; or in response to a received sixth operation, modify the fifth content, to obtain the fourth content, where the sixth operation indicates to modify the fifth content to the fourth content. The second model may be a specified generative AI model.

In a possible design, the training data further includes fourth location information and fourth task information, the fourth location information indicates a fourth location in the third content, and the fourth task information indicates to execute a fourth processing task at the fourth location; and the fourth content further includes content obtained by executing the fourth processing task at the fourth location based on a part or all of the third content other than the fourth location.

In a possible design, when obtaining the training data, the server is specifically configured to: obtain the third content, second indication information, and third indication information, where the second indication information indicates to execute the third processing task at the third location in the third content, and the third indication information indicates to execute the fourth processing task at the fourth location in the third content; input the third content and the second indication information into a second model, to determine fifth content; or input the content at the third location in the third content and the second indication information into a second model, to determine fifth content; or input the second indication information into a second model, to determine fifth content, where the fifth content includes content obtained by the second model by executing the third processing task based on input content; or inputting the third content and the third indication information into the second model, to determine sixth content; or input the content at the fourth location in the third content and the third indication information into a second model, to determine sixth content; or input the third indication information into a second model, to determine sixth content, where the sixth content includes content obtained by the second model by executing the fourth processing task based on input content; and determine the fourth content based on the fifth content and the sixth content.

Optionally, when determining the fourth content based on the fifth content and the sixth content, the server is specifically configured to: use, as the fourth content, content obtained by combining seventh content determined based on the fifth content and eighth content determined based on the sixth content, where the seventh content is the fifth content or content obtained by modifying the fifth content in response to a received operation, and the eighth content is the sixth content or content obtained by modifying the sixth content in response to a received operation.

In a possible design, when performing model training on the specified model based on the training data, to obtain the first model, the server is specifically configured to: input the training data into the specified model, to determine ninth content, where the ninth content includes content obtained by the specified model by executing the third processing task at the third location in the third content; and adjust the specified model based on the third content and the ninth content, to obtain the first model.

In a possible design, the ninth content further includes content obtained by the specified model by executing the fourth processing task at the fourth location in the third content.

Optionally, the specified model is a model of a specified network structure or a specified generative AI model.

In a possible design, the first content includes at least one of the following: a text, an image, audio, a video, and code.

In a possible design, when the first content is a first image, the first location information is a semantic mask image corresponding to the content at the first location in the first image.

In a possible design, the first model is a generative artificial intelligence AI model.

According to a third aspect, this application provides a model training method, applied to an electronic device. The method includes: obtaining training data, where the training data includes first content, first location information, first task information, and second content, the first location information indicates a first location in the first content, and the first task information indicates to execute a first processing task at the first location; and the second content includes content obtained by executing the first processing task at the first location based on a part or all of the first content other than the first location; and performing model training on a specified model based on the training data, to obtain a first model. Optionally, the electronic device may be a server or a terminal device.

In the method, in the training data, the part or all of the first content other than the first location may be used as context content of the first location, and the second content includes content obtained by executing the first processing task at the first location based on the context content. Therefore, the model obtained through training based on the training data can have a capability of performing a corresponding processing task at a location based on context content of the location in content. However, task processing is performed at the location based on the context content of the location, to obtain a more accurate processing result. Therefore, according to the model training method, an output result when the first model obtained through training executes a task can have higher accuracy, and more easily meet a task processing requirement, thereby improving practicability of the first model obtained through training. Therefore, a model with better task processing effect can be obtained through training in the model training method.

In a possible design, obtaining the training data includes: obtaining the first content and first indication information, where the first indication information indicates to execute the first processing task at the first location in the first content; determining the first location information and the first task information based on the first indication information; inputting the first content and the first indication information into a second model, to determine third content; or inputting the content at the first location in the first content and the first indication information into a second model, to determine third content; or when there is no content at the first location, inputting the first indication information into a second model, to determine third content, where the third content includes content obtained by the second model by executing the first processing task based on input content; and determining the second content based on the third content.

Optionally, determining the second content based on the third content includes: using the third content as the second content; or in response to a received first operation, modifying the third content, to obtain the second content, where the first operation indicates to modify the third content to the second content. The second model may be a specified generative AI model.

The method for obtaining the training data may be applied to a scenario in which the first model used to process a single task is trained. According to the method, the electronic device may collect, by using the specified second model, a part that is of the training data and that is used as a task processing result. Content, namely, the third content, obtained by processing the second model based on a user operation is modified, so that accuracy of task processing result data in the training data can be improved through manual correction. Further, accuracy of model training performed based on the training data can be improved, to obtain the first model with good processing effect.

In a possible design, the training data further includes second location information and second task information, the second location information indicates a second location in the first content, and the second task information indicates to execute a second processing task at the second location; and the second content further includes content obtained by executing the second processing task at the second location based on a part or all of the first content other than the second location.

Based on the method, the electronic device may implement training of the first model used to process a plurality of tasks together.

In a possible design, obtaining the training data includes: obtaining the first content, first indication information, and second indication information, where the first indication information indicates to execute the first processing task at the first location in the first content, and the second indication information indicates to execute the second processing task at the second location in the first content; inputting the first content and the first indication information to a second model, to determine third content; or inputting the content at the first location in the first content and the first indication information into a second model, to determine third content; or inputting the first indication information into a second model, to determine third content, where the third content includes content obtained by the second model by executing the first processing task based on input content; inputting the first content and the second indication information into the second model, to determine fourth content; or inputting the content at the second location in the first content and the second indication information into the second model, to determine fourth content; or inputting the second indication information into the second model, to determine fourth content, where the fourth content includes content obtained by the second model by executing the second processing task based on input content; and determining the second content based on the third content and the fourth content.

Optionally, determining the second content based on the third content and the fourth content includes: using, as the second content, content obtained by combining fifth content determined based on the third content and sixth content determined based on the fourth content, where the fifth content is the third content or content obtained by modifying the third content in response to a received operation, and the sixth content is the fourth content or content obtained by modifying the fourth content in response to a received operation.

The method for obtaining the training data may be applied to a scenario in which the first model used to process a plurality of tasks is trained. According to the method, the electronic device may collect, by using the specified second model, a part that is of the training data and that is used as a task processing result. Content, namely, the third content and the fourth content, obtained by processing the second model based on a user operation is modified, so that accuracy of task processing result data in the training data can be improved through manual correction. Further, accuracy of model training performed based on the training data can be improved, to obtain the first model with good processing effect.

In a possible design, performing model training on the specified model based on the training data, to obtain the first model includes: inputting the training data into the specified model, to determine seventh content, where the seventh content includes content obtained by the specified model by executing the first processing task at the first location in the first content; and adjusting the specified model based on the first content and the seventh content, to obtain the first model.

In the method, the electronic device may adjust the specified model based on a deviation between a task processing result with high accuracy, namely, the seventh content, and a task processing result obtained by using the specified model, namely, the second content, so that the task processing result of the specified model approaches an accurate task processing result, and further train the first model with good processing effect.

In a possible design, the seventh content further includes content obtained by the specified model by executing the second processing task at the second location in the first content. With reference to the method, the first model that has good processing effect and that is used to process a plurality of tasks may be obtained through training.

In a possible design, the first content includes at least one of the following: a text, an image, audio, a video, and code.

The first content in the method may include at least one type of content. Therefore, based on the method, a model that can better process a single task or a plurality of tasks of various types of content may be obtained through training.

In a possible design, when the first content is a first image, the first location information is a semantic mask image corresponding to the content at the first location in the first image.

Semantic mask images can clearly and intuitively represent locations of different types of content in an image, which helps improve accuracy of location identification and task processing for the image.

In a possible design, the specified model is a model of a specified network structure or a specified generative AI model, and the first model is a generative artificial intelligence AI model. The generative AI model can execute a generative task. The generative AI model is used in the method, to further extend a range of tasks that may be executed by the model obtained through training, and improve a task execution capability of the model obtained through training.

According to a fourth aspect, this application provides an electronic device. The electronic device includes a memory and one or more processors, the memory is configured to store computer program code, the computer program code includes computer instructions, and when the computer instructions are executed by the one or more processors, the electronic device is enabled to perform the method according to any one of the first aspect or the possible designs of the first aspect, or perform the method according to any one of the third aspect or the possible designs of the third aspect.

According to a fifth aspect, this application provides a computer-readable storage medium. The computer-readable storage medium stores a computer program, and when the computer program is run on an electronic device, the electronic device is enabled to perform the method according to any one of the first aspect or the possible designs of the first aspect, or perform the method according to any one of the third aspect or the possible designs of the third aspect.

According to a sixth aspect, this application provides a computer program product. The computer program product includes a computer program or instructions, and when the computer program or the instructions are run on an electronic device, the electronic device is enabled to perform the method according to any one of the first aspect or the possible designs of the first aspect, or perform the method according to any one of the third aspect or the possible designs of the third aspect.

According to a seventh aspect, this application provides a chip system. The chip system includes a processor and a memory, the memory stores instructions, and when the instructions are executed by the processor, the method according to any one of the first aspect or the possible designs of the first aspect is implemented, or the method according to any one of the third aspect or the possible designs of the third aspect is implemented. The chip system may include a chip, or may include a chip and another discrete component.

For beneficial effects of the second aspect to the seventh aspect, refer to corresponding beneficial effects of the first aspect, the second aspect, or the third aspect. Details are not described herein again.

### BRIEF DESCRIPTION OF DRAWINGS

FIG. 1 is a diagram of a task processing method;
FIG. 2 is a diagram of a hardware architecture of an electronic device according to an embodiment of this application;
FIG. 3 is a diagram of a software architecture of an electronic device according to an embodiment of this application;
FIG. 4a is a diagram of an architecture of a content processing system according to an embodiment of this application;
FIG. 4b is a diagram of an architecture of another content processing system according to an embodiment of this application;
FIG. 5 is a diagram of a content processing method according to an embodiment of this application;
FIG. 6 is a diagram of a content editing method according to an embodiment of this application;
FIG. 7 is a diagram of a content conversion method according to an embodiment of this application;
FIG. 8 is a diagram of a content processing result according to an embodiment of this application;
FIG. 9 is a schematic flowchart of a content processing method according to an embodiment of this application;
FIG. 10 is a diagram of original content according to an embodiment of this application;
FIG. 11 is a diagram of a content conversion method according to an embodiment of this application;
FIG. 12 is a diagram of a content processing process according to an embodiment of this application;
FIG. 13 is a diagram of a content conversion control method according to an embodiment of this application;
FIG. 14 is a diagram of a content conversion control interface according to an embodiment of this application;
FIG. 15 is a diagram of a content conversion control interface according to an embodiment of this application;
FIG. 16 is a diagram of a content conversion control interface according to an embodiment of this application;
FIG. 17 is a diagram of a content processing method according to an embodiment of this application;
FIG. 18 is a diagram of a content processing method according to an embodiment of this application; and
FIG. 19 is a diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The terms "first" and "second" below in the description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, concepts related to this application are described for reference by using examples.
(1) An electronic device may be a device having a processing and computing capability, for example, may be a device having an AI model (for example, a generative AI model).

In some embodiments of this application, the electronic device may be a compute device such as a server. For example, the electronic device may be a cloud server.

In some embodiments of this application, the electronic device may be a portable device, for example, a mobile phone, a tablet computer, a wearable device (for example, a watch or a band) with a wireless communication function, a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television or a smart speaker), a smart robot, a workshop device, a wireless terminal in self-driving (self-driving), a wireless terminal in remote surgery (remote medical surgery), a wireless terminal in smart grid (smart grid), a wireless terminal in transportation safety (transportation safety), a wireless terminal in smart city (smart city), a wireless terminal in smart home (smart home), or a flight device (for example, a smart robot, an uncrewed aerial vehicle, or an aircraft).

The wearable device is a portable device that can be directly worn by a user or integrated into clothes or accessories of the user.

In some embodiments of this application, the electronic device may alternatively be a portable terminal device that further includes another function, for example, a personal digital assistant function and/or a music player function. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

(2) A generative artificial intelligence (artificial intelligence, AI) model is an artificial intelligence model based on a deep learning technology, and can simulate human creative thinking and generate logical and coherent content such as a text, an image, audio, a video, or code. The generative AI model may receive an input such as a text, an image, audio, a video, and code, and generate new content in any of the foregoing forms.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be a singular or plural number.

Currently, task execution effect of some AI models (for example, a generative AI model and a large language basic model) is unstable, and a good task processing result may be unable to be obtained when some tasks (for example, a complex task or an associated task) are executed. Consequently, practicability of the generative AI model is low. In addition, some AI models achieve good effect of processing a single task input by using a single input sequence, but achieve poor effect of processing a complex task that includes a plurality of tasks and that is input by using a single input sequence.

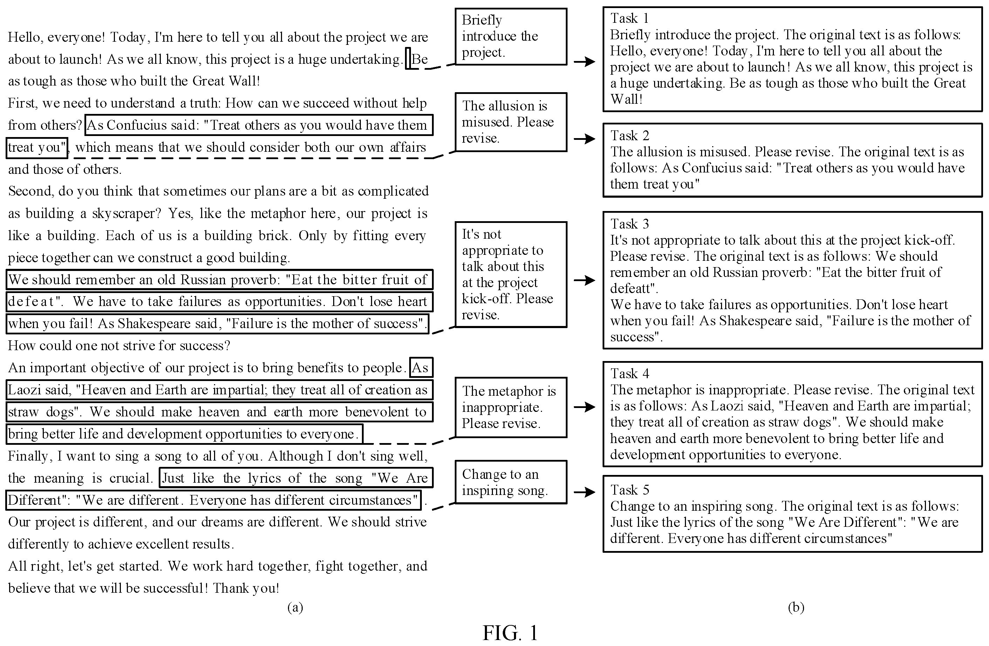

For example, as shown in a diagram (a) in FIG. 1, when a complex task that is set by a user for a segment of text includes a plurality of editing tasks (for example, five tasks shown in the diagram (a) in FIG. 1) of annotating the segment of text by the user, if the segment of text and the plurality of corresponding editing tasks are directly input into an AI model as a sequence, it is difficult for an output result of the AI model to meet all requirements of the plurality of editing tasks. Consequently, processing effect is poor.

Currently, a multi-task splitting solution may be further used. To be specific, after the complex task including the plurality of tasks is split into a plurality of single tasks that may be resolved in a single input, the single tasks are separately input into the AI model for processing, to obtain a processing result of each task. For example, this solution may be used to split the complex task shown in the diagram (a) in FIG. 1 into five separate tasks shown in the diagram (b) in FIG. 1, namely, a task 1 to a task 5. Processing results of the five separate tasks can be separately obtained by inputting the five separate tasks into the AI model at five times, and are combined to obtain a processing result of the entire complex task.

In the foregoing method, after the complex task is split into the single tasks, the AI model can perform task processing based only on limited content corresponding to the single task. Consequently, processing accuracy cannot be ensured, and good processing effect cannot be achieved. In some cases, a plurality of tasks may have an association (for example, an editing task "Same as above" in a text annotation). Processing effect is also affected after processing through splitting. In addition, in the foregoing method, each task needs to be separately processed, and therefore, overall processing efficiency is low.

In conclusion, currently, effect of processing a task by using an AI model is poor, and in particular, a processing effect of processing a plurality of tasks by using the AI model is poor, and efficiency is low. Therefore, practicability of the AI model is low.

Based on the foregoing problem, to improve practicability of the AI model, embodiments of this application provide a content processing method and system, and an electronic device. In this solution, a task is processed more conveniently, efficiently, and accurately by using the AI model, thereby improving efficiency of processing a task by using the AI model and processing effect, and improving practicability of the AI model.

The technical solutions provided in embodiments of this application may be executed by any compute device having a processing and computing capability, or may be executed by a system including a plurality of compute devices having a processing, computing, and communication capability. The compute device may be an electronic device, or the like. For descriptions of performance of the electronic device, refer to the foregoing descriptions in the concept descriptions or refer to the following related descriptions.

An example in which the technical solutions of this application are applied to an electronic device or a system including a plurality of electronic devices is used below for description. An implementation process of applying the technical solutions to another compute device is similar, and details are not described again. Optionally, the electronic device may have an AI model.

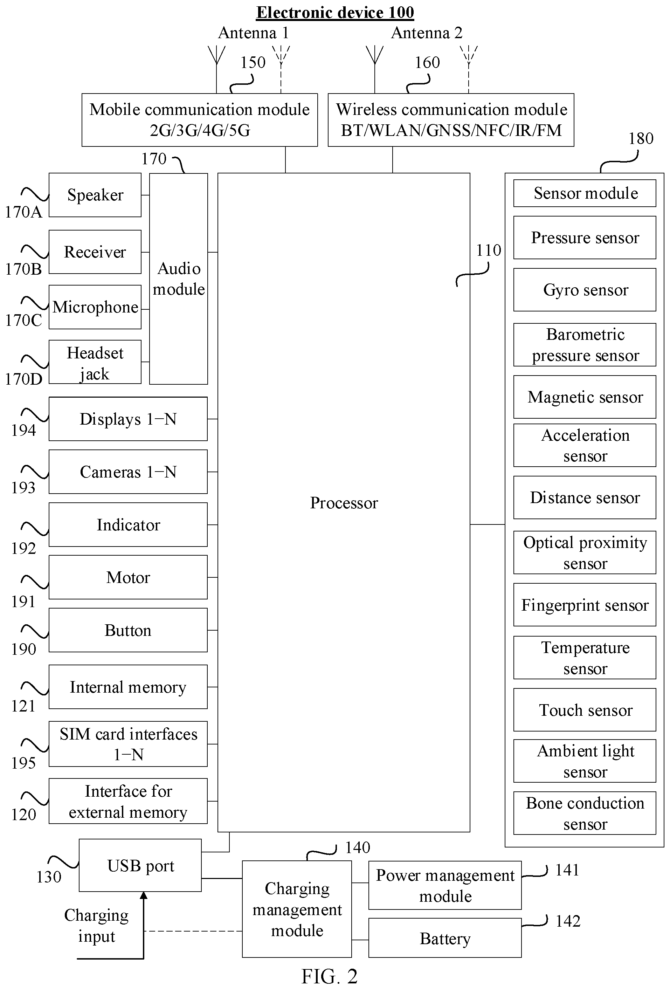

The following describes, with reference to FIG. 2, a structure of an electronic device to which a method provided in embodiments of this application is applicable.

As shown in FIG. 2, an electronic device 100 may include a processor 110, an interface 120 for external memory, an internal memory 121, a USB port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like.

The sensor module 180 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 2 is merely an example, and does not constitute a limitation on the electronic device. In addition, the electronic device may have more or fewer components than those shown in the figure, or may combine two or more components, or may have different component configurations. Various components shown in FIG. 2 may be implemented in hardware including one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

Performing of a content processing method provided in embodiments of this application may be controlled by the processor 110 or completed by invoking another component. For example, a processing program in embodiments of this application that is stored in the internal memory 121 is invoked, or a processing program in embodiments of this application that is stored in a third-party device is invoked by using the interface 120 for external memory, to control the wireless communication module 160 to perform data communication with another device, thereby improving intelligence and convenience of the electronic device 100 and improving user experience. The processor 110 may include different components. For example, when a CPU and a GPU are integrated, the CPU and the GPU may cooperate to perform the content processing method provided in embodiments of this application. For example, in the content processing method, some algorithms are performed by the CPU, and the other algorithms are performed by the GPU, to obtain fast processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information entered by a user or information provided for a user and various graphical user interfaces (graphical user interface, GUI). For example, the display 194 may display a photo, a video, a web page, a file, or the like.

In embodiments of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element such as a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, code of an application program (for example, a function corresponding to the solution of this application), and the like. The data storage area may store data created in a process of using the electronic device 100, and the like.

The internal memory 121 may further store one or more computer programs corresponding to the algorithms in the solutions of this application. The one or more computer programs are stored in the internal memory 121 and are configured to be executed by the one or more processors 110. The one or more computer programs include instructions, and the instructions may be used to perform steps in the following embodiments.

In addition, the internal memory 121 may include a high-speed random access memory, and may further include a nonvolatile memory, for example, at least one magnetic disk storage device, a flash memory, or a universal flash storage (universal flash storage, UFS).

Certainly, code of the algorithms in the solutions of embodiments of this application may alternatively be stored in an external memory. In this case, the processor 110 may run, through the interface 120 for external memory, the code of the algorithms in the solutions of this application that is stored in the external memory.

The touch sensor is also referred to as a "touch panel". The touch sensor may be disposed on the display 194. The touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor may alternatively be disposed on a surface of the electronic device 100, and is at a location different from that of the display 194.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. In embodiments of this application, the mobile communication module 150 may be further configured to exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio apparatus (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In embodiments of this application, the wireless communication module 160 may be configured to: establish a connection to another electronic device, and exchange data. Alternatively, the wireless communication module 160 may be configured to access an access point device, send a control instruction to another electronic device, or receive data sent by another electronic device.

In addition, the electronic device 100 may implement an audio function, such as music playing and recording, by using the audio module 170, the speaker 170A, the receiver 170B, the microphone 170C, the headset jack 170D, the application processor, and the like. The electronic device 100 may receive an input from the button 190, and generate a button signal input related to user settings and function control of the electronic device 100. The electronic device 100 may generate a vibration prompt (for example, an incoming call vibration prompt) by using the motor 191. The indicator 192 in the electronic device 100 may be an indicator light, and may indicate a charging status or a power change, or may indicate a message, a missed call, a notification, or the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, during actual application, the electronic device 100 may include more or fewer components than those shown in FIG. 2. This is not limited in embodiments of this application. The electronic device 100 shown in the figure is merely an example, and the electronic device 100 may have more or fewer components than those shown in the figure, or may combine two or more components, or may have different component configurations. Various components shown in the figure may be implemented in hardware including one or more signal processing and/or application-specific integrated circuits, software, or a combination of hardware and software.

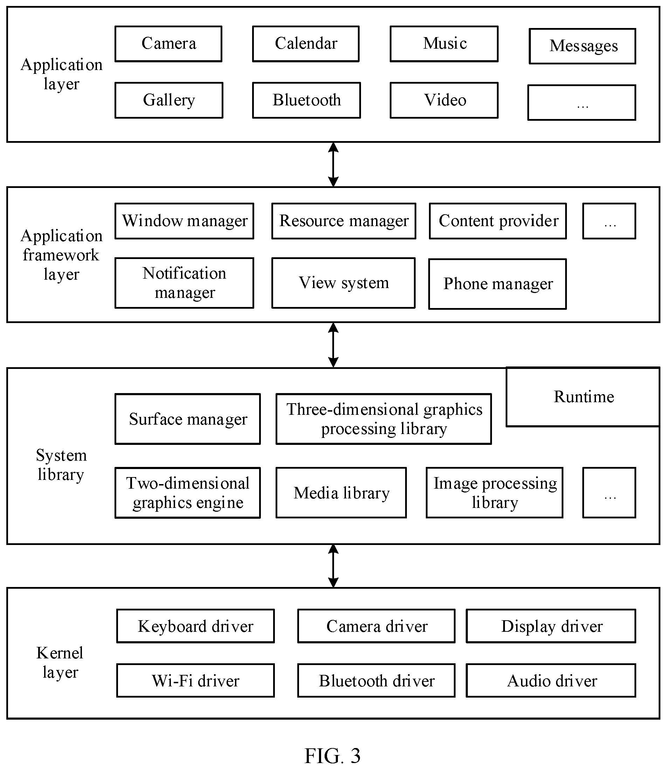

A software system of the electronic device 100 may use a layered architecture, an event-driven architecture, a microkernel architecture, a micro-service architecture, or a cloud architecture. In a layered architecture, software is divided into several layers, and each layer has a clear role and task. The layers communicate with each other through a software interface. For example, as shown in FIG. 3, the software architecture may be divided into four layers: an application layer, an application framework (framework, FWK) layer, a runtime and system library, and a (Linux) kernel (kernel) layer from top to bottom.

The application layer is an uppermost layer of the operating system, includes a native application of the operating system, such as Camera, Gallery, Calendar, Bluetooth, Music, Video, and Messages, and may further include a third-party application. An application program in embodiments of this application is briefly referred to as an application (application, APP), and is a software program that can implement one or more specific functions. Generally, a plurality of applications may be installed in the electronic device, for example, a camera application and an email application. The application mentioned in the following may be a system application installed before delivery of the electronic device, or may be a third-party application downloaded from a network or obtained from another electronic device by a user in a process of using the electronic device.

Certainly, a developer may compile an application and install the application at the layer. In a possible implementation, the application may be developed by using a Java language, and is completed by invoking an application programming interface (application programming interface, API) provided by the application framework layer. A developer may interact with a bottom layer (for example, the kernel layer) of the operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a display size, determine whether there is a status bar, lock a display (or a screen), take a screenshot, and the like.

The content provider is configured to: store and obtain data, and enable the data to be accessed by an application program. The data may include information such as a file (for example, a document, a video, an image, or audio), and a text.

The view system includes visual controls, for example, controls that display content such as a text, a picture, and a document. The view system may be configured to construct an application program. An interface in a display window may include one or more views. For example, a display interface including an SMS message notification icon may include a text display view and an image display view.

The phone manager is configured to provide a communication function of the electronic device. The notification manager enables an application program to display notification information in a status bar, and may be configured to convey a notification message. The notification manager may automatically disappear after a short pause without requiring a user interaction.

A runtime includes a core library and a virtual machine. The runtime is responsible for scheduling and management of the system.

The core library of the system may include two parts: a function that needs to be invoked by using the Java language, and a core library of the system. The application layer and the application framework layer run on the virtual machine. Java is used as an example. The virtual machine executes a binary file of a Java file at the application layer and the application framework layer. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to: manage a display subsystem, and provide fusion of two-dimensional and three-dimensional graphics layers for a plurality of applications. The media library supports playback and recording in a plurality of commonly used audio and video formats, and static image files. The media library can support a plurality of audio and video coding formats, such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer provides a core system service of the operating system. For example, security, memory management, process management, a network protocol stack, and a driver model are all implemented based on the kernel layer. The kernel layer is also used as an abstraction layer between hardware and software stacks. The layer has a plurality of drivers related to the electronic device, and has the following main drivers: a display driver, a keyboard driver used as an input device, a flash driver based on a memory technology device, a camera driver, an audio driver, a Bluetooth driver, a Wi-Fi driver, and the like.

It should be understood that the foregoing function service is merely an example. During actual application, the electronic device may be divided into more or fewer function services based on another factor, or may be divided into functions of all services in another manner, or may not be divided into function services, but work as a whole.

The following describes the solutions provided in embodiments of this application in detail.

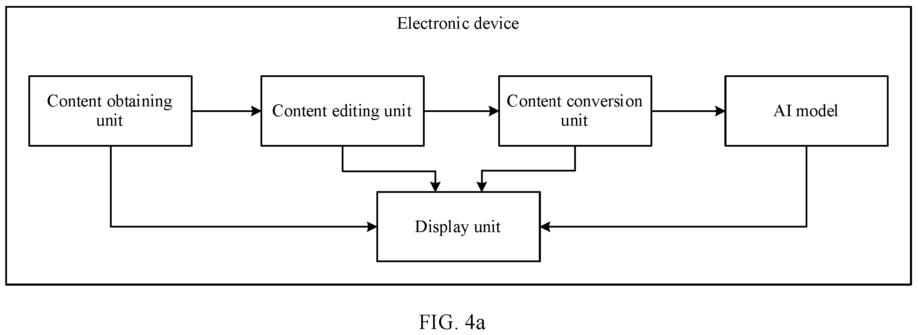

FIG. 4a is a diagram of an architecture of a content processing system according to an embodiment of this application. The content processing system may be deployed in an electronic device. As shown in FIG. 4a, the content processing system may include a content obtaining unit, a content editing unit, a content conversion unit, an AI model, and a display unit.

The electronic device may be a server or a terminal device.

For example, the server may be a cloud server.

For example, when the electronic device is a terminal device, a hardware architecture of the terminal device may be implemented by using the architecture shown in FIG. 2, and a software architecture of the terminal device may be implemented by using the architecture shown in FIG. 3.

For example, when the software architecture of the terminal device is implemented by using the architecture shown in FIG. 3, functional units in the content processing system may be separately deployed at architecture layers such as the application layer or the application framework layer shown in FIG. 3. This is not specifically limited in this embodiment of this application.

The content obtaining unit may be configured to obtain to-be-processed original content. A format of the to-be-processed original content may be various media formats such as a text, an image, audio, a video, and code. The content obtaining unit may be further configured to send the original content to the content editing unit. The original content may be understood as content existing before editing.

The content editing unit may be configured to interact with a user, to perform task editing on the original content based on an operation of the user. The user may perform an editing operation on any one or more locations in the original content, to indicate a task that needs to be processed for the any one or more locations in the original content. There may be content or may be no content at each location. That there is no content may be understood as that content is empty. The content editing unit may add, to each location based on each editing operation performed by the user at each location in the original content, task indication information indicating a task corresponding to the editing operation, to obtain edited content. In some embodiments of this application, the edited content may include the original content and task indication information of each of one or more tasks. Each of the one or more tasks may be specifically a task (or an operation) executed at a location in the original content, and the task indication information of each task indicates the task. In the foregoing method, the original content may include one or more pieces of sub-content, and each piece of sub-content may be a part or all of the original content. One piece of sub-content or no sub-content (which may also be understood as that sub-content included at the location is empty) may be included at each location in the original content. Different pieces of sub-content in the original content can be completely the same, partially the same, or completely different. When different pieces of sub-content in the original content are completely the same, the different pieces of sub-content correspond to different tasks; or when different pieces of sub-content of the original content are partially the same or completely different, the different pieces of sub-content may correspond to a same task or different tasks. The content editing unit may be further configured to send the edited content to the content conversion unit.

In some embodiments of this application, the one or more tasks may be tasks indicated by one user, or tasks indicated by a plurality of users.

The content conversion unit may be configured to convert the edited content into single-task prompt content or multi-task prompt content. When the edited content includes one task, the content conversion unit may convert the edited content into the single-task prompt content; or when the edited content includes a plurality of tasks, the content conversion unit may convert the edited content into the multi-task prompt content. In some embodiments of this application, the single-task prompt content may include the original content and task prompt content corresponding to the one task. The multi-task prompt content may include the original content and task prompt content corresponding to each of the plurality of tasks. The task prompt content corresponding to each task may include sub-content at a location corresponding to the task, location information of the location corresponding to the task, and task indication information of the task. The location information indicates the location. The content conversion unit may be further configured to send the single-task prompt content or the multi-task prompt content to the AI model.

The AI model may be configured to: generate a single-task processing result based on the single-task prompt content, or generate a multi-task processing result based on the multi-task prompt content. The single-task processing result includes content obtained by executing the one task for the original content. The multi-task processing result includes content obtained by executing the plurality of tasks for the original content. The single-task prompt content or the multi-task prompt content may be input content of the AI model, and the single-task processing result or the multi-task processing result may be output content of the AI model. In some embodiments of this application, the AI model may be a trained model that can identify and process the single-task prompt content or the multi-task prompt content. For a training process of the AI model, refer to related descriptions in the following embodiments. Details are not described herein. In some other embodiments of this application, when the AI model is a model that cannot directly identify or process the multi-task prompt content, the content conversion unit may convert the multi-task prompt content into a plurality of pieces of single-task prompt content, input each piece of single-task prompt content into the AI model for processing, and obtain a single-task processing result that corresponds to each piece of single-task prompt content and that is output by the AI model. Further, content obtained by executing the plurality of tasks for the original content can be obtained through summarization.

The display unit may be configured to display the original content, the edited content, the single-task prompt content, the multi-task prompt content, the single-task processing result, or the multi-task processing result. In some embodiments of this application, the display unit may be configured to display the original content after the content obtaining unit obtains the original content; or may be configured to display the edited content after the content editing unit obtains the edited content; or may be configured to display the single-task prompt content or the multi-task prompt content after the content conversion unit converts the edited content into the single-task prompt content or the multi-task prompt content; or may be configured to display the single-task processing result or the multi-task processing result after the AI model outputs the single-task processing result or the multi-task processing result.

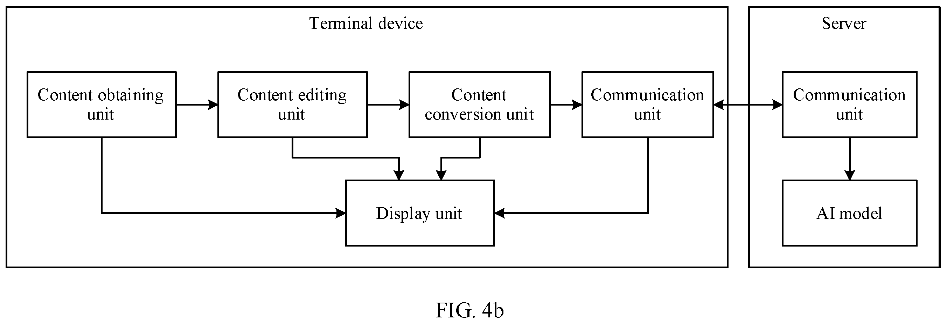

FIG. 4b is a diagram of an architecture of another content processing system according to an embodiment of this application. As shown in FIG. 4b, the content processing system may include a terminal device and a server. Optionally, the terminal device may include a content obtaining unit, a content editing unit, a content conversion unit, a display unit, and a communication unit. The server may include a communication unit and an AI model.

For the content obtaining unit, the content editing unit, the content conversion unit, and the display unit in the terminal device, refer to the foregoing descriptions. Details are not described herein again. The communication unit in the terminal device may be configured to send single-task prompt content or multi-task prompt content determined by the content conversion unit to the communication unit in the server, and may be further configured to send a single-task processing result or a multi-task processing result from the communication unit in the server to another unit. The communication unit in the server may be configured to send the received single-task prompt content or the received multi-task prompt content to the AI model, so that the AI model processes the single-task prompt content or the multi-task prompt content. The communication unit in the server may further send the single-task processing result or the multi-task processing result determined by the AI model to the communication module in the terminal device. For the AI model in the server, refer to the foregoing descriptions. Details are not described herein again.

A difference between the content processing system shown in FIG. 4b and the content processing system shown in FIG. 4a lies in that, the content processing system shown in FIG. 4a is deployed in a same electronic device, and the content processing system shown in FIG. 4b is deployed in different electronic devices in a distributed manner. In addition, for an implementation of an architecture of the content processing system shown in FIG. 4b and a structure, a function, and the like of an internal functional unit, refer to the content processing system shown in FIG. 4a. Details are not described in this embodiment of this application.

It should be understood that the foregoing architecture of the content processing system is merely an example. During actual application, the electronic device may be divided into more or fewer functional units based on another factor, or may be divided into functions of all units in another manner, or may not be divided into functional units, but work as a whole.

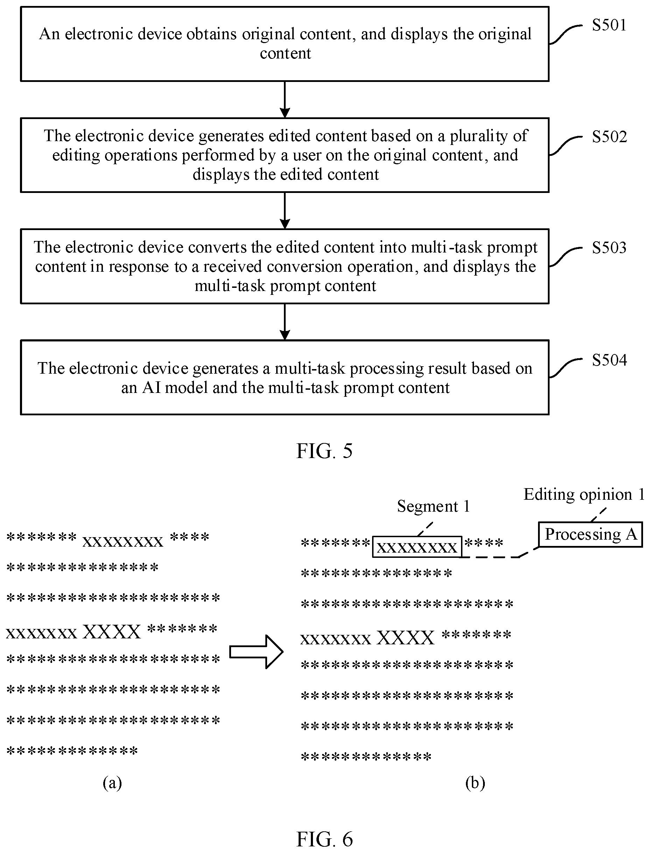

Based on the foregoing descriptions, an example in which the content processing method provided in embodiments of this application is applied to a same electronic device is used. A scenario in which the electronic device processes a plurality of tasks by using an AI model is used as an example. For a possible content processing method provided in an embodiment of this application, refer to FIG. 5. For an implementation of a scenario in which the electronic device processes a single task by using the AI model, refer to the method shown in FIG. 5. Details are not described in this embodiment of this application.

As shown in FIG. 5, a possible content processing method may include the following steps.

S501: An electronic device obtains original content, and displays the original content.

In some embodiments of this application, the original content may be content in various media formats such as a document, a text, an image, audio, a video, and code.

A manner of obtaining the original content by the electronic device may be, for example, obtaining original content entered by a user, generating original content based on a user operation, or obtaining original content sent by another device. The manner of obtaining the original content by the electronic device is not specifically limited in this embodiment of this application.

Example 1: In an example, that the original content is content in a text format is used as an example, and the original content may be a segment of text shown in a diagram (a) in FIG. 6. Herein, *, x, X, and the like indicate text content.

Optionally, when the method provided in this embodiment of this application is applied to the content processing system shown in FIG. 4a, the step of obtaining the original content in step S501 may be performed by the content obtaining unit shown in FIG. 4a, and the step of displaying the original content in step S501 may be performed by the display unit shown in FIG. 4a.

S502: The electronic device generates edited content based on a plurality of editing operations performed by the user on the original content, and displays the edited content.

In some embodiments of this application, each editing operation performed by the user is used to select any location in the original content and indicate a task to be executed at the location. The edited content may include the original content and task indication information corresponding to each of the plurality of editing operations. The task indication information corresponding to each editing operation indicates a task indicated by the editing operation, namely, a processing task that needs to be executed at the location selected for the editing operation.

Optionally, the edited content may further include a content mark corresponding to each of the plurality of editing operations. The content mark corresponding to each editing operation is used to mark the location selected for the editing operation.

When there is content at a location selected by the user in the original content, the user selects the location, that is, selects sub-content at the location. Therefore, in this scenario, selecting a location is equivalent to selecting sub-content. Therefore, in the following embodiments of this application, selecting sub-content is equivalent to selecting a location of the sub-content.

In some embodiments of this application, locations or sub-content selected for different editing operations may be completely the same (which may also be understood as completely overlapping or coinciding), or may be partially the same (which may also be understood as partially overlapping or coinciding), or may be completely different (which may also be understood as completely non-overlapping or non-coinciding).

Based on the foregoing method, the original content may include a plurality of pieces of sub-content.

During specific implementation, performing one editing operation by the user on the original content may include: selecting any location in the original content, and performing the editing operation at the location. The editing operation may indicate a task that needs to be executed at the location. Optionally, sub-content at the location may be a subset of the original content. One editing operation performed by the user is equivalent to one task delivery.

In some embodiments of this application, the original content, location information, and the task indication information in the edited content may exist independently; or a part of content may be merged into a whole, and the other part of the content may exist independently; or all of content may be merged into a whole. This is not specifically limited in this embodiment of this application.

In an optional implementation, each time the user performs an editing operation, the electronic device may add task indication information (which may indicate a task corresponding to the editing operation) corresponding to the editing operation to the original content in response to the editing operation, and may display content obtained by adding the task indication information. The user may perform a plurality of editing operations on the original content in the foregoing method. After the plurality of editing operations performed by the user end, the electronic device may obtain the edited content, and may display the edited content.

Example 2: In an example, based on Example 1, when the user performs an editing operation on original content shown in a diagram (a) in FIG. 6, as shown in a diagram (b) in FIG. 6, performing an editing operation by the user on the original content may include: selecting a segment 1 in the original content, and adding an editing opinion 1 of "processing A" for the segment 1, to indicate to perform processing A on the segment 1. In this case, a task corresponding to the editing operation is performing processing A on the segment 1. Sub-content corresponding to the editing operation is the segment 1, and the task indication information may be the editing opinion 1 shown in the diagram (b) in FIG. 6. After the user performs the editing operation on the original content shown in the diagram (a) in FIG. 6, the electronic device may switch from displaying the content shown in (a) in FIG. 6 to displaying content shown in the diagram (b) in FIG. 6, to present the editing operation performed by the user on the original content to the user. Based on a method the same as the foregoing method, the user may sequentially edit the original content for a plurality of times, and the electronic device may obtain and display the edited content after the user performs editing for a plurality of times.

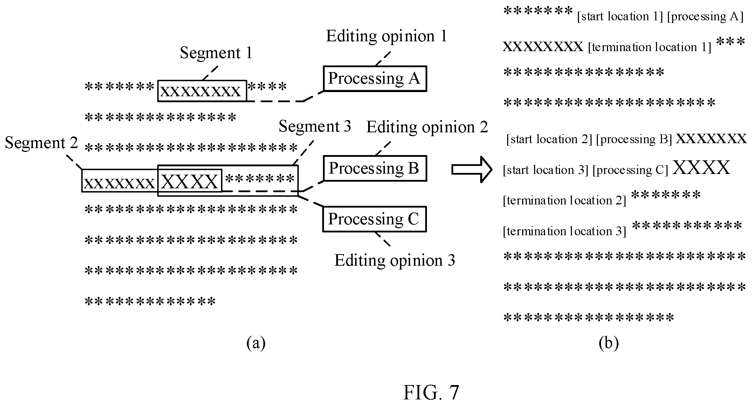

In an example, the edited content displayed by the electronic device may be content shown in a diagram (a) in FIG. 7. It may be determined, based on the content, that the user performs three editing operations. Sub-content corresponding to a 1^{st} editing operation is a segment 1, corresponding task indication information is an editing opinion 1, and a corresponding task is performing processing A on the segment 1. Sub-content corresponding to a 2^{nd} editing operation is a segment 2, corresponding task indication information is an editing opinion 2, and a corresponding task is performing processing B on the segment 2. Sub-content corresponding to a 3^{rd} editing operation is a segment 3, corresponding task indication information is an editing opinion 3, and a corresponding task is performing processing C on the segment 3.

Optionally, when the method provided in this embodiment of this application is applied to the content processing system shown in FIG. 4a, the step of generating the edited content based on the plurality of editing operations performed by the user on the original content in step S502 may be performed by the content editing unit shown in FIG. 4a, and the step of displaying the edited content in step S502 may be performed by the display unit shown in FIG. 4a.

S503: The electronic device converts the edited content into multi-task prompt content in response to a received conversion operation, and displays the multi-task prompt content.

The conversion operation indicates to convert the edited content into the multi-task prompt content. In some embodiments of this application, a process of converting the edited content into the multi-task prompt content may also be referred to as creation.

In some embodiments of this application, the multi-task prompt content may include the original content, task indication information corresponding to each of the plurality of editing operations for the original content, and location information of a location corresponding to each of the plurality of editing operations. The location corresponding to each editing operation is a location selected for the editing operation, and the location information of the location corresponding to each editing operation indicates the location.

In some other embodiments of this application, the multi-task prompt content may be content obtained by adding location information of each location to the edited content.

In the foregoing method, any location, task indication information corresponding to the location, and location information of the location may form task prompt content of the location. Therefore, the multi-task prompt content may include task prompt content of each of a plurality of locations.

In a possible solution, the location information of each location may include start location information and termination location information. The start location information indicates a start point of the location, and the termination location information may indicate a termination point (namely, an end point) of the location.

Optionally, the start location information and the termination location information may be the same or may be different.

Optionally, the start location information and the termination location information may be displayed as information in various formats such as a mark, an icon, a text, and a character. A format of the start location information and the termination location information is not specifically limited in this embodiment of this application.

Optionally, in the multi-task prompt content, an arrangement sequence of any location, start location information of the location, termination location information of the location, and task indication information corresponding to the location may be any sequence or may be a preset sequence. For example, in a possible manner, when there is sub-content at the location, the sub-content may be located between the start location information of the location and the termination location information of the location. The task indication information corresponding to the location may be located between the start location information of the location and the location, or may be located between the location and the termination location information of the location.

In another possible solution, the location information of each location may include mark information used to mark the location. The mark information may be, for example, an underscore, a contour line, a shadow, or an icon. A format of the mark information is not specifically limited in this embodiment of this application.

Example 3: In an example, based on Example 2, the multi-task prompt content obtained after the electronic device converts the edited content shown in the diagram (a) in FIG. 7 may be content shown in a diagram (b) in FIG. 7. Specifically, in the edited content shown in the diagram (a) in FIG. 7, a record of each editing operation of the user includes a corresponding segment and an editing opinion. However, in the multi-task prompt content shown in the diagram (b) in FIG. 7, a record of each editing operation of the user includes a corresponding segment, start location information and termination location information of the segment, and an editing opinion. For example, a sorting and a format of the segment, the start location information and the termination location information of the segment, and the editing opinion in the multi-task prompt content are "[start location information of a segment] [editing opinion of the segment (namely, task indication information of the segment)] [segment] [termination location information of the segment]". As shown in the diagram (b) in FIG. 7, task prompt content of the segment 1 includes: [start location 1] [processing A] xxxxxxxx [termination location 1]. Herein, [start location 1] is start location information of the segment 1, [processing A] is the task indication information of the segment 1, xxxxxxxx is content included in the segment 1, and [termination location 1] is termination location information of the segment 1. Because the segment 2 and the segment 3 coincide and the segment 2 is before the segment 3, task prompt content of the segment 2 includes start location information and the task indication information in task prompt content of the segment 3, and the task prompt information of the segment 3 includes termination location information in the task prompt information of the segment 2. As shown in the diagram (b) in FIG. 7, the task prompt content of the segment 2 and the task prompt content of the segment 3 are combined and displayed as: [start location 2] [processing B] xxxxxxx [start location 3] [processing C] XXXX [termination location 2] ******* [termination location 3]. Herein, [start location 2] is start location information of the segment 2, [processing B] is the task indication information of the segment 2, xxxxxxx and XXXX are content included in the segment 2, and [termination location 2] is termination location information of the segment 2. These items of content form the task prompt content of the segment 2. [start location 3] is the start location information of the segment 3, [processing C] is the task indication information of the segment 3, XXXX and ******* are content included in the segment 3, and [termination location 3] is termination location information of the segment 3. The items of content form the task prompt content of the segment 3.

In some embodiments of this application, the location information of each location may be associated with sub-content at the location. Alternatively, the location information of each location may include identification information of the location. For example, in the multi-task prompt content shown in the diagram (b) in FIG. 7, a sequence number "1" in start location information and termination location information of the segment 1 may be used as identification information of the segment 1, and a sequence number "2" in the start location information and the termination location information of the segment 2 may be used as identification information of the segment 2.

In some embodiments of this application, when a location selected by the user when editing the original content does not include valid content in the original content, it may be considered that sub-content at the location is empty, and task prompt content corresponding to the location may not include the sub-content either. To be specific, the task prompt content corresponding to the location may include only an editing opinion and location information that correspond to the location. Alternatively, it may be considered that sub-content at the location is the original content, and task prompt content corresponding to the location includes an editing opinion corresponding to the location, the original content, and location information of the original content. Alternatively, it may be considered that sub-content at the location is content in a specified range in which the location at which the user performs editing is located, and task prompt content corresponding to the location includes an editing opinion corresponding to the location, the content in the specified range, and location information of the content in the specified range.

Optionally, when the method provided in this embodiment of this application is applied to the content processing system shown in FIG. 4a, the step of converting the edited content into the multi-task prompt content in response to a received first operation in step S503 may be performed by the content conversion unit shown in FIG. 4a, and the step of displaying the multi-task prompt content in step S503 may be performed by the display unit shown in FIG. 4a.

S504: The electronic device generates a multi-task processing result based on an AI model and the multi-task prompt content.

Optionally, the AI model may be a generative AI model.

In some embodiments of this application, the AI model may be a trained AI model that can identify the multi-task prompt content. For a training process of the AI model, refer to the method in the following embodiments. Details are not described herein. The electronic device may directly input the multi-task prompt content into the trained AI model as a single input sequence, and obtain the multi-task processing result output by the AI model.

In a possible solution, when processing the multi-task prompt content, the AI model may determine a plurality of corresponding tasks based on a plurality of pieces of task prompt content in the multi-task prompt content, and process each task based on task prompt content of each of the plurality of tasks. When processing each task, the AI model may determine, based on an editing opinion of the task, a task that needs to be executed, and may determine a location corresponding to the task and context content (namely, content in the original content other than a selected location) of the location based on location information corresponding to the task, and then execute, at the location based on the context content of the location, the task that needs to be executed. Based on this manner, the AI model can also perform processing based on more content when processing a single task, thereby improving processing accuracy and improving processing effect of the AI model.

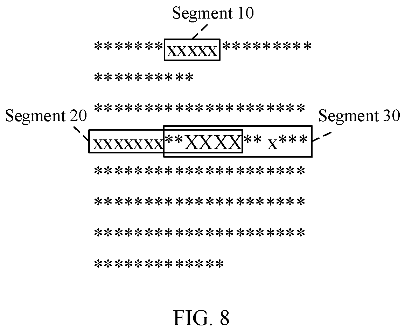

Example 4: In an example, based on Example 3, that the multi-task prompt content is the multi-task prompt content shown in the diagram (b) in FIG. 7 is used as an example. After the electronic device inputs the multi-task prompt content shown in the diagram (b) in FIG. 7 into the AI model, the multi-task processing result output by the AI model may be content shown in FIG. 8, and the content includes content obtained by respectively executing corresponding tasks for the segments 1 to 3 shown in the diagram (b) in FIG. 7. A segment 10 shown in FIG. 8 is a segment obtained by executing a task of "performing processing A on the segment 1" for the segment 1 shown in the diagram (b) in FIG. 7. A segment 20 shown in FIG. 8 is a segment obtained by executing a task of "performing processing B on the segment 2" for the segment 2 shown in the diagram (b) in FIG. 7. A segment 30 shown in FIG. 8 is a segment obtained by executing a task of "performing processing C on the segment 3" for the segment 3 shown in the diagram (b) in FIG. 7.

Optionally, when the method provided in this embodiment of this application is applied to the content processing system shown in FIG. 4a, step S504 may be performed by the AI model shown in FIG. 4a.

In the foregoing method, the electronic device converts content (namely, the edited content) including a plurality of to-be-executed tasks into multi-task prompt content in a specific format, so that the plurality of to-be-executed tasks can be separately described and prompted by using related content in the multi-task prompt content, to facilitate identification by the AI model. The electronic device may directly input, as a single-input sequence, the multi-task prompt content including the plurality of tasks into the AI model for processing, and obtain the corresponding multi-task processing result. In this way, processing effect can be ensured, and the plurality of tasks can be executed in the single input sequence, that is, effect of obtaining output results of the plurality of tasks through one input, thereby improving processing efficiency.

The following describes an example of the method in the foregoing embodiments based on a specific instance.

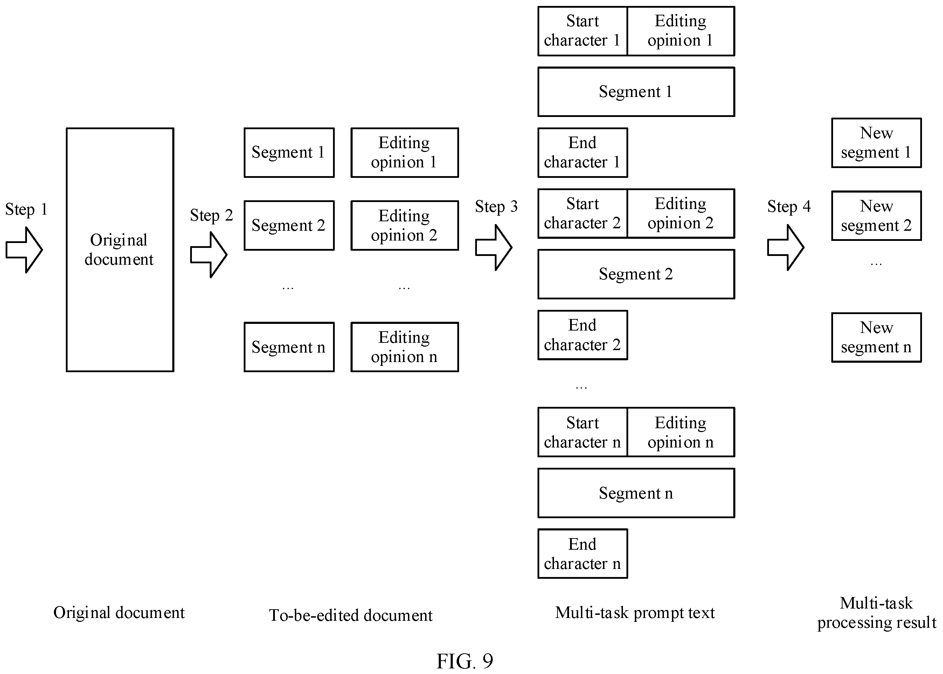

An example in which the original content in the foregoing embodiments is text content in an original document is used. As shown in FIG. 9, a procedure of a content processing method provided in an embodiment of this application may include the following steps.

Step 1: An electronic device obtains the original document.

The original document includes the original content.

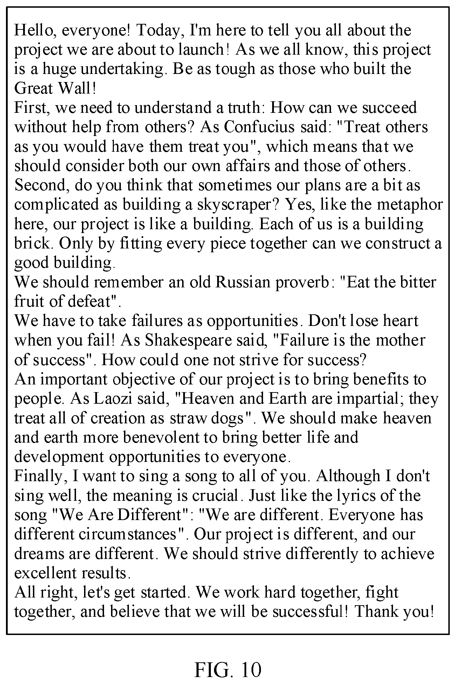

Example 5: In an example, the original content included in the original document may be text content shown in FIG. 10.

Step 2: The electronic device determines an edited document based on interactive editing performed by a user on the original document.

Interactive editing may include: selecting a plurality of segments in the original document, and generating a corresponding editing opinion for each selected segment. The editing opinion indicates a to-be-executed task for the segment.

The edited document obtained by the user by performing interactive editing on the original document includes edited content.

The segment may be a subset of the text content in the original document, and there may be an intersection between the plurality of segments. Each segment may correspond to at least one editing opinion. Each editing opinion corresponds to one task.

For example, as shown in FIG. 9, the plurality of segments may include a segment 1 to a segment n (n is a positive integer greater than 1), and editing opinions corresponding to the segment 1 to the segment n are respectively an editing opinion 1 to an editing opinion n.

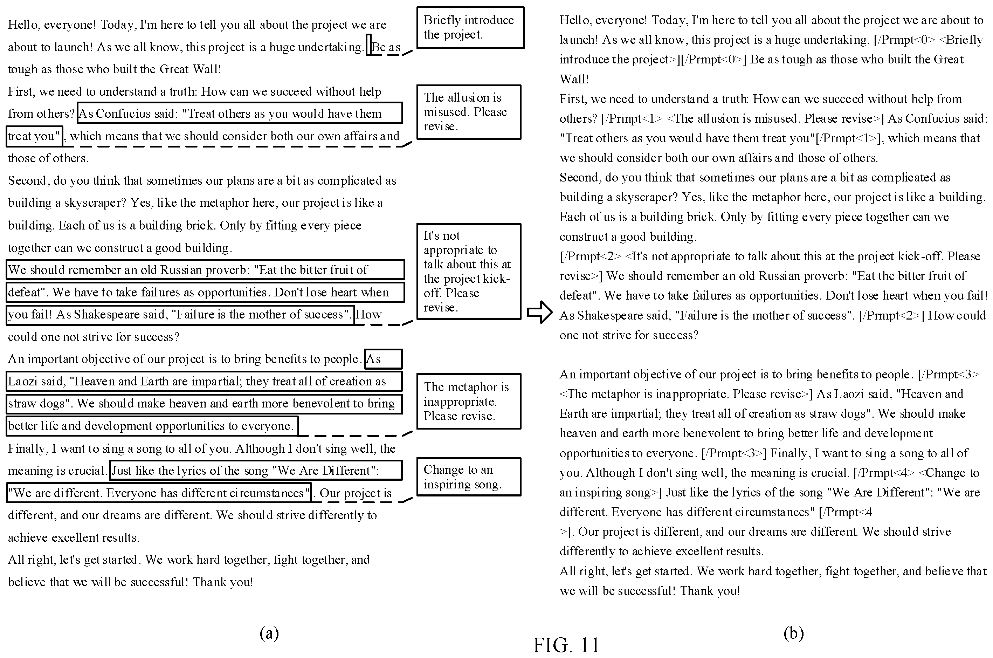

Example 6: In an example, based on Example 5, content, namely, edited content, obtained by the user by performing interactive editing on the text content shown in FIG. 10 is shown in a diagram (a) in FIG. 11. The edited content includes five editing opinions for five segments in the original content.

Step 3: The electronic device generates a multi-task prompt text based on the edited content.

The multi-task prompt text may be content obtained by marking the original content in the original document with a start location and an end location of editing a segment and a corresponding editing opinion.

Each edited segment in the multi-task prompt text has a corresponding start character, a corresponding editing opinion, and a corresponding end character. The start character is used as start location information of the corresponding segment, and the end character is used as termination location information of the corresponding segment. Each segment, the corresponding start character, the corresponding editing opinion, and the corresponding end character form task prompt content corresponding to the segment.

For example, as shown in FIG. 9, a start character of the to-be-edited segment 1 may be a start character 1, an editing opinion of the segment 1 may be an editing opinion 1, and an end character of the segment 1 may be an end character 1. A start character of a to-be-edited segment 2 may be a start character 2, an editing opinion of the segment 2 may be an editing opinion 2, and an end character of the segment 2 may be an end character 2. The same is true to another segment.

Example 7: In an example, based on Example 6, a multi-task prompt text obtained by converting the edited content shown in the diagram (a) in FIG. 11 by the electronic device may be a multi-task prompt text shown in a diagram (b) in FIG. 11. In the edited content shown in the diagram (a) in FIG. 11, each editing record of the user includes a segment area and an editing opinion. The electronic device may convert each editing record of the user into a format of "[/Prmpt<id> <editing opinion>] original segment [/Prmpt<id>]", to obtain the multi-task prompt text shown in the diagram (b) in FIG. 11. [/Prmpt<id> <editing opinion>] is used as a start, and indicates a start location of a document segment that needs to be edited and a corresponding editing opinion; [/Prmpt<id>] is used as an end, and indicates an end location of the document segment that needs to be edited; and the original segment in the middle includes a to-be-edited segment selected by the user, and the segment is a subset of the original content in the original document. For example, in the multi-task prompt text shown in the diagram (b) in FIG. 11, a to-be-edited segment may include: As Confucius said: "Treat others as you would have them treat you". Task prompt content corresponding to the segment may be "[/Prmpt<1> <The allusion is misused. Please revise>] As Confucius said: "Treat others as you would have them treat you" [/Prmpt<1>]" shown in the diagram (b) in FIG. 11. A 1^{st} character "/Prmpt<1>" in the task prompt content is a start character and may be used as start location information of the to-be-edited segment, and a 2^{nd} character "/Prmpt<1>" is an end character and may be used as termination location information of the to-be-edited segment. The same is true to another segment.

Step 4: The electronic device inputs the multi-task prompt text into an AI model, to obtain a multi-task processing result.

In a possible solution, for an AI model (for example, the trained AI model in the foregoing embodiments) that may directly identify the multi-task prompt text, the electronic device directly inputs the obtained multi-task prompt text into the AI model without performing other processing, to obtain the multi-task processing result output by the AI model.

In another possible solution, for an AI model that cannot identify the multi-task prompt text, the electronic device may generate a plurality of single-task prompt texts based on the multi-task prompt text, and then input each single-task prompt text into the AI model for processing, to obtain a task processing result corresponding to each single-task prompt text. Then, task processing results corresponding to the plurality of single-task prompt texts are summarized and integrated, to obtain a multi-task processing result corresponding to the multi-task prompt text. Each single-task prompt text may include task prompt content of a segment corresponding to one editing opinion. Optionally, a segment (namely, a segment corresponding to the editing opinion) in the task prompt content may also be replaced with content of a paragraph in which the segment is located or original content.

In still another possible solution, for an AI model that cannot identify the multi-task prompt text, the electronic device may explain, in a system setting or a user context by using a prompt, how to process the multi-task prompt text, to assist the AI model in well processing the multi-task prompt text.

For example, as shown in FIG. 9, the multi-task processing result output after the AI model processes the multi-task prompt text may include content obtained by performing corresponding processing on each segment, for example, a new segment 1 to a new segment n shown in FIG. 9. The new segment 1 to the new segment n are content respectively obtained after the AI model performs corresponding task processing on the segment 1 to the segment n.

The foregoing method implements more efficient document processing. The electronic device converts a document, so that the AI model can execute tasks corresponding to a plurality of editing opinions in one input (namely, a single input sequence). Therefore, processing efficiency is high. In addition, compared with a method in which a complex task is split into a plurality of executable simple tasks, the foregoing method is featured by richer contexts, and therefore has better processing effect.

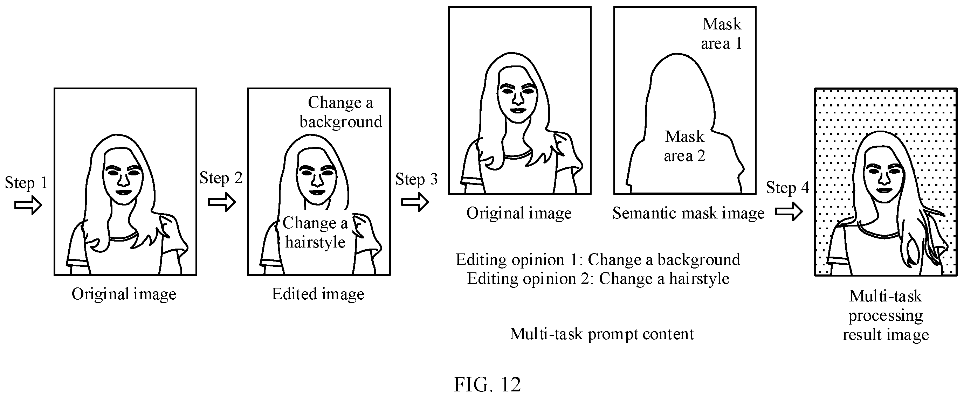

An example in which the original content in the foregoing embodiments is an original image is used. As shown in FIG. 12, a procedure of a content processing method provided in an embodiment of this application may include the following steps.

Step 1: An electronic device obtains an original image.

For example, the original image may be an original image shown in FIG. 12.

Step 2: The electronic device determines an edited image based on interactive editing performed by a user on the original image.

Interactive editing may include: selecting a plurality of image areas in the original image, and generating an editing opinion for each selected image area.

The edited image obtained by performing interactive editing on the original image by the user includes edited content.

The image area may be a subset of the original image, and a plurality of image areas may coincide. Each image area may correspond to at least one editing opinion. Each editing opinion corresponds to one task.

For example, an image obtained by performing interactive editing on the original image shown in FIG. 12 by the user may be an edited image shown in FIG. 12. For example, an area selected by the user in the edited image may include a background area and a portrait area. An editing opinion 1 corresponding to the background area may be "Change a background". An editing opinion 2 corresponding to the portrait area may be "Change a hairstyle".

Step 3: The electronic device generates multi-task prompt content based on the edited image.

For example, as shown in FIG. 12, the multi-task prompt content generated by the electronic device based on the edited image may include: the original image, a semantic mask (mask) image obtained by performing semantic segmentation on the original image, and editing opinions, namely, the editing opinion 1 and the editing opinion 2. The semantic mask image includes a mask area 1 and a mask area 2. The mask area 1 is location information of the background area, and may indicate a location of the background area in the original image. The mask area 2 is location information of the portrait area, and may indicate a location of the portrait area in the original image. The editing opinion 1 is an editing opinion corresponding to the background area, and the editing opinion 2 is an editing opinion corresponding to the portrait area.

Optionally, the editing opinion may be a separate text content, or may be mark content added in the mask area in the semantic mask image. A format and a setting manner of the editing opinion are not specifically limited in this embodiment of this application.

Step 4: The electronic device inputs the multi-task prompt content into an AI model, to obtain a multi-task processing result.

For example, content obtained by processing the multi-task prompt content by the AI model may be a multi-task processing result image shown in FIG. 12. The multi-task processing result image includes content obtained by respectively processing the background area and the portrait area in the original image based on the corresponding editing opinions.

In the foregoing method, for image content, the user may select different image areas in an editing process, and specify different editing tasks for each area. The electronic device converts the image, so that the AI model can process a plurality of editing opinions for the image in one input and generate processing results of a plurality of image editing tasks. Therefore, processing efficiency is high.

Based on the foregoing descriptions, an embodiment of this application further provides a content conversion control method. The content conversion control method may be applied to the foregoing embodiments, and may be specifically applied to a process in which the electronic device performs steps S501 to S503 in the foregoing embodiments.

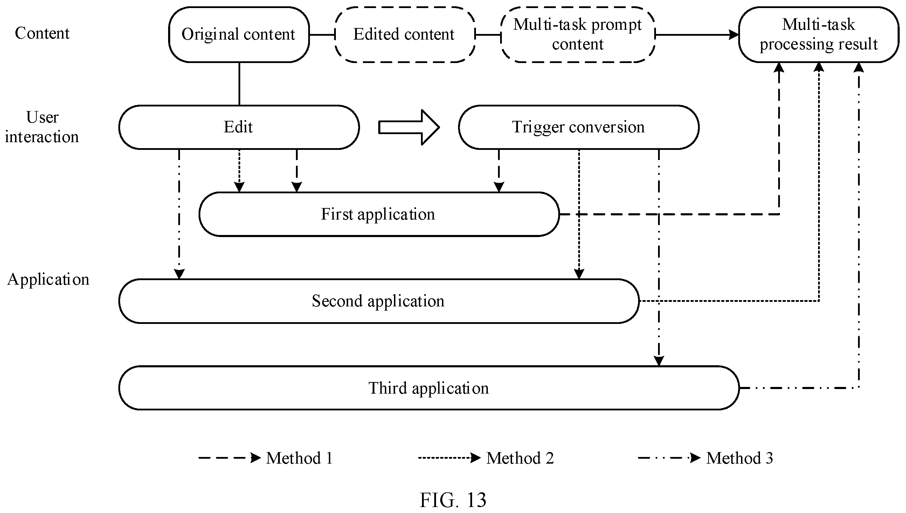

As shown in FIG. 13, the content conversion control method provided in this embodiment of this application may be any one of the following methods:

Method 1: The electronic device performs steps S501 to S503 by using a first application.

In the method, the first application may generate or obtain original content, and display the original content. After displaying the original content, the first application may generate edited content in response to an operation of editing the original content by a user, and display the edited content. After displaying the edited content, the first application may generate multi-task prompt content based on the edited content in response to a received conversion operation, and display the multi-task prompt content.

In the method, the first application may be installed in the electronic device. Optionally, the first application may be an application used to generate the original content.

In some embodiments of this application, when displaying the edited content, the first application may display a conversion control used to trigger content conversion; and in response to a received conversion operation performed on the conversion control, may generate the multi-task prompt content based on the edited content, and display the multi-task prompt content. The conversion operation indicates to convert the edited content into the multi-task prompt content.

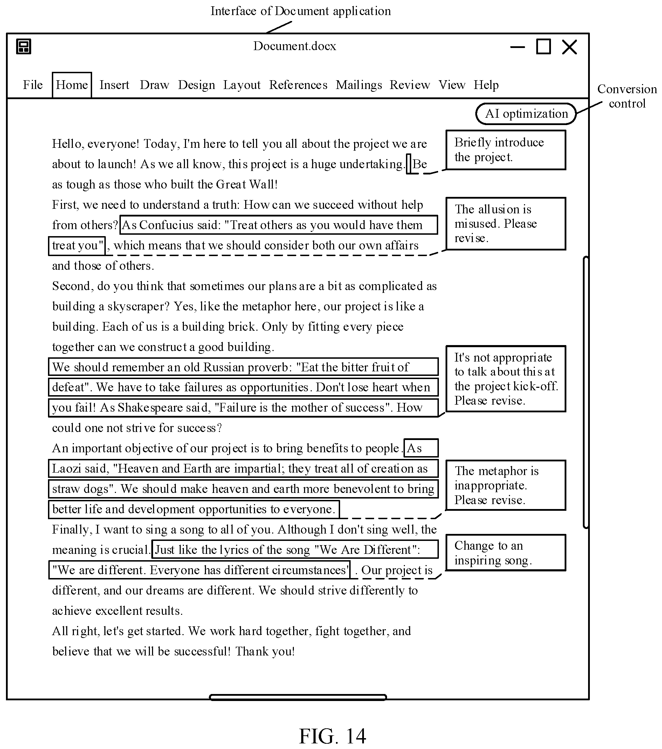

For example, that the original content is text content in the original document in the foregoing embodiments is used as an example, and the first application may be a document application. As shown in FIG. 14, when displaying the edited content, the document application may display the conversion control, and may convert the edited content into the multi-task prompt content in response to an operation of tapping the conversion control by the user, and display the multi-task prompt content.

Optionally, a manner in which the first application displays the multi-task prompt content may be: displaying the multi-task prompt content after the original content, or replacing the original content with the multi-task prompt content, or displaying the multi-task prompt content in a new interface or a newly created document interface.

Method 2: The electronic device performs steps S501 and S502 by using a first application, and performs step S503 by using a second application.

The second application may be a system application or a third-party application. For example, the system application may be a system-type AI processing application such as a smart assistant. The third-party application may be a third-party AI processing application, or the like installed in the electronic device.

In the method, the first application may generate or obtain original content, and display the original content. After displaying the original content, the first application may generate edited content in response to an operation of editing the original content by a user, and display the edited content. After obtaining the edited content, the second application may convert the edited content into multi-task prompt content in response to a received conversion operation.

A manner in which the second application obtains the edited content may be any one of the following:
(1) After displaying the edited content, the first application may forward the edited content to the second application in response to a received forwarding operation.
   For example, the forwarding operation may be an operation that the user drags, to an application interface of the second application, the edited content (or a file, for example, a document, that includes the edited content) displayed by the first application.
(2) The second application may obtain, in response to a received user operation, edited content indicated by the user operation.

For example, the user may copy the edited content (or a file, for example, a document, that includes the edited content) from the first application, and paste the edited content into the second application, so that the second application obtains the edited content. In this example, the user operation received by the second application may be an operation of pasting the original content into the second application by the user.

In some embodiments of this application, after receiving the edited content, the second application may display the edited content. After converting the edited content into the multi-task prompt content, the second application may display the multi-task prompt content. Optionally, when displaying the edited content, the second application may generate the multi-task prompt content based on the edited content in response to the received conversion operation. The conversion operation indicates to convert the original content into the multi-task prompt content. For example, the conversion operation may be an operation of entering a conversion instruction by the user, or may be an operation performed by the user on the conversion control displayed by the second application. The conversion control may be configured to trigger conversion of the edited content into the multi-task prompt content.

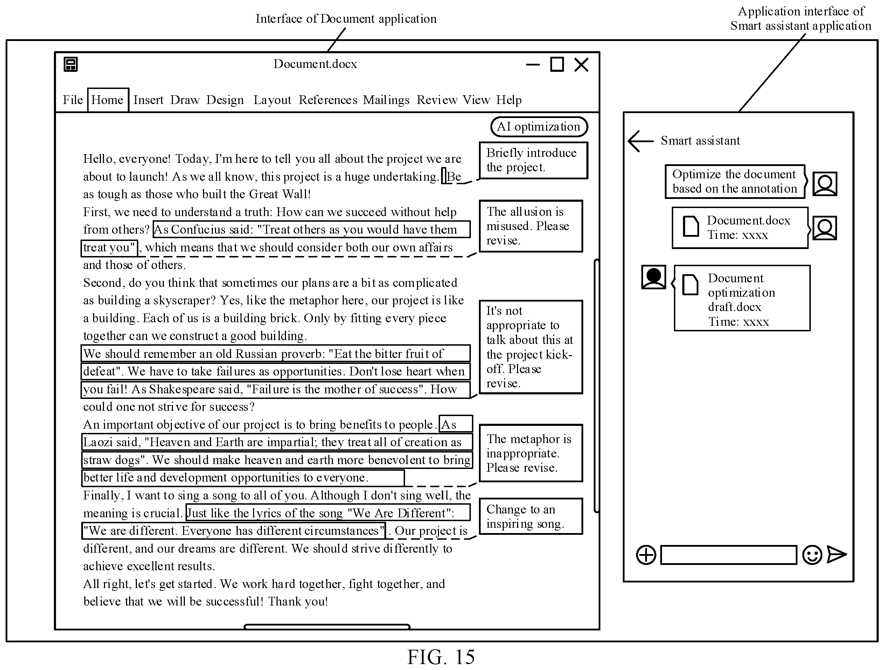

For example, the second application is a smart assistant application, and the original content is text content in the original document in the foregoing embodiments. The first application may be a document application. As shown in FIG. 15, the document application may display the edited content, and the smart assistant application may display an application interface used to interact with the user. After displaying the edited content, the document application may send a document to which the edited content belongs to the smart assistant application in response to an operation that the user drags the document to an application interface displayed by the smart assistant application. The smart assistant application may display the document in a user interface; and in response to the conversion operation of the user (for example, an operation that the user enters an indication of "Optimize the document based on the annotation" in the application interface of the smart assistant application), may convert the edited content in the document into the multi-task prompt content, and feed back the multi-task prompt content (for example, a document optimization draft shown in FIG. 15).

Method 3: The electronic device performs step S501 by using a first application, performs step S502 by using a second application, and performs step S503 by using the second application or a third application.

The first application may generate or obtain original content, and may further display the original content. The second application may be a system application or a third-party application. The third application may be a system application or a third-party application.

In a possible method, the first application may generate or obtain the original content, and display the original content. After displaying the original content, the first application may forward the original content to the second application in response to a received forwarding operation. For a specific forwarding manner, refer to a method in which the first application forwards edited content to the second application in Method 2. Details are not described herein again.

In another possible method, the second application may obtain, in response to a received user operation, original content indicated by the user operation. For a specific obtaining manner, refer to a method in which the second application obtains edited content based on the user operation in Method 2. Details are not described herein again.

The second application may display the original content after obtaining the original content in any one of the foregoing possible methods; and may generate the edited content in response to an operation of editing the original content by a user, and display the edited content.

In a possible method, after displaying the edited content, the second application may generate multi-task prompt content based on the edited content in response to a received conversion operation, and display the multi-task prompt content. For a specific implementation of the method, refer to Method 1. Details are not described herein again.

In another possible method, after the second application displays the edited content, the third application may convert the edited content into the multi-task prompt content in response to a received conversion operation after obtaining the edited content. For a specific implementation of the method, refer to Method 2. Details are not described herein again.

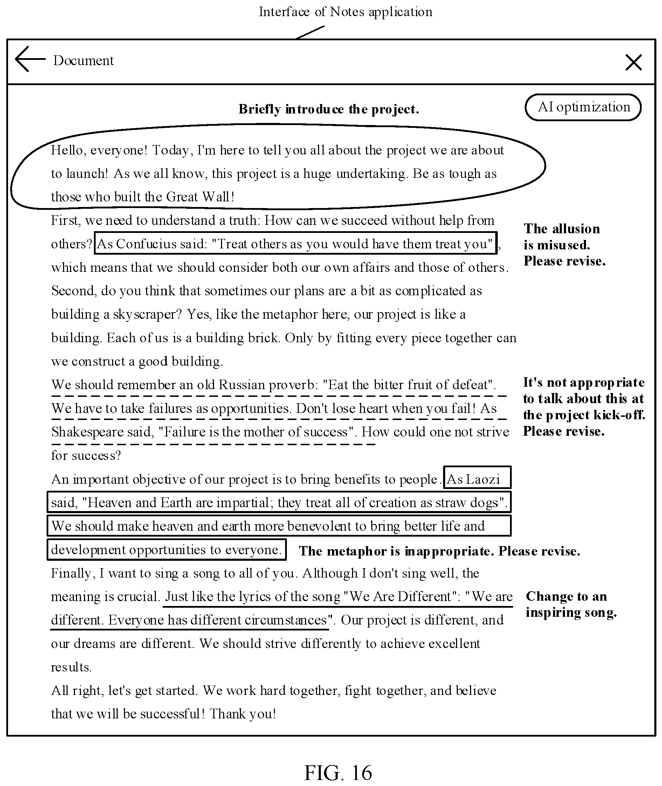

For example, the second application is a Notes application, and the original content is content in the original document in the foregoing embodiments. The first application may be a document application. After the Notes application obtains and displays the original content, the user may edit, in a handwriting manner, the original content displayed by the Notes application, to obtain edited content shown in FIG. 16.

It should be noted that the application in the foregoing method may also be replaced with a service process, a functional unit, or the like.

Based on the foregoing method, the electronic device supports content editing and multi-task processing in a plurality of interaction manners. During actual application, a proper manner may be selected based on a specific scenario for processing. Therefore, flexibility and practicability are high.

The following describes an AI model training method in embodiments of this application.

A possible AI model training method provided in an embodiment of this application may include the following steps.

Step 1: An electronic device obtains a training dataset.

In this step, the training dataset obtained by the electronic device may include single-task prompt content and a corresponding single-task processing result, and/or multi-task prompt content and a corresponding multi-task processing result. For a format and specific included content of data such as the single-task prompt content, the single-task processing result, the multi-task prompt content, and the corresponding multi-task processing result, refer to the descriptions in the foregoing embodiments. Details are not described herein again.

After obtaining the single-task prompt content, the electronic device may input the single-task prompt content into a deep learning model for processing, to obtain an output result corresponding to the single-task prompt content. After obtaining the multi-task prompt content, the electronic device may split the multi-task prompt content into a plurality of pieces of single-task prompt content, and input each piece of single-task prompt content into the deep learning model for processing, to obtain an output result corresponding to each piece of single-task prompt content. For each piece of single-task prompt content, the electronic device may use the output result corresponding to the single-task prompt content as a single-task processing result corresponding to the single-task prompt content, or may use a modified output result as a single-task processing result corresponding to the single-task prompt content in response to a received operation. The operation indicates to modify the output result.

For the multi-task prompt content, after determining single-task processing results corresponding to the plurality of pieces of single-task prompt content in the multi-task prompt content, the electronic device may summarize and integrate the task processing results corresponding to the plurality of pieces of single-task prompt content, to obtain the multi-task processing result corresponding to the multi-task prompt content, and further obtain the multi-task prompt content and the corresponding multi-task processing result that are used as a training dataset.

Optionally, the deep learning model may be an AI model of a specified network structure or a specified type. For example, the deep learning model may be an existing generative pre-trained transformer (generative pre-trained transformer, GPT) model or a large language model.

Step 2: The electronic device trains the deep learning model based on the training dataset, to obtain a trained AI model.

In a possible solution, the electronic device may input the multi-task prompt content in the training dataset into a specified model, and generate a corresponding processing result by using the specified model; and may perform reinforcement learning from human feedback (reinforcement learning from human feedback, RLFH) on the specified model based on the processing result of the specified model and a single-task processing result and/or a multi-task processing result in training data, to optimize a model parameter and processing effect of the specified model, so that the specified model learns of a capability of processing a task based on a context and processing a plurality of tasks in a single input sequence. Optionally, the specified model may be an AI model.

The model obtained through training in the method may serve as a model that can identify and process the multi-task prompt content.

Certainly, the electronic device may also train the specified model in another training manner, to obtain an AI model that can process a task based on a context and identify and process the multi-task prompt content. A specific model training manner is not specifically limited in this embodiment of this application.

It should be noted that implementation procedures provided in the foregoing embodiments are merely examples for description of the method procedures applicable to embodiments of this application. A performing sequence of the steps may be correspondingly adjusted based on an actual requirement, or another step may be added, or some steps may be reduced.

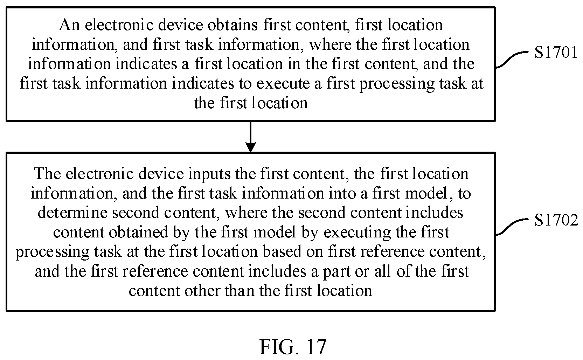

Based on the foregoing embodiments and same technical concepts, an embodiment of this application further provides a content processing method. As shown in FIG. 17, the method may include the following steps.

S1701: An electronic device obtains first content, first location information, and first task information, where the first location information indicates a first location in the first content, and the first task information indicates to execute a first processing task at the first location.

Optionally, the electronic device may be the electronic device shown in FIG. 4a. Steps in the method may be performed by the content processing system deployed in the electronic device shown in FIG. 4a. For a specific execution method, refer to related descriptions in the foregoing embodiments. Details are not described herein again.

The following describes the first content, the first location information, and the first task information in detail.

In a first possible solution, the first content may include first sub-content, the first location may be a location before or after the first sub-content, first reference content may include the first sub-content, and the first reference content may be used as context content of the first location.

For example, the first content may be the original content in the foregoing embodiments, the first location may be any location in the original content in the foregoing embodiments, the first sub-content may be content before or after the location, and the first task information may be task indication information corresponding to the location (or location information of the location).

Example 8: In an example, the first content may be text content shown in FIG. 10, the first sub-content may be "Be as tough as those who built the Great Wall!" shown in FIG. 10 or a diagram (a) in FIG. 11, and the first location may be a location before the first sub-content, namely, a location corresponding to an editing opinion "Briefly introduce the project" shown in the diagram (a) in FIG. 11.

Optionally, if the first location is a location before the first sub-content, in content input into the first model, the first location information and the first task information are located before the first sub-content; or if the first location is a location after the first sub-content, in content input into the first model, the first location information and the first task information are located after the first sub-content.

For example, the content input into the first model may be the multi-task prompt content in the foregoing embodiments.

Example 9: In an example, based on Example 8, the content input into the first model may be the multi-task prompt text shown in a diagram (b) in FIG. 11. The first location information includes two pieces of [/Prmpt<0>], and the first task information is <Briefly introduce the project>. In the multi-task prompt text, the first location information and the first task information are located before the first sub-content.

In a second possible solution, based on the first possible solution, the first content may further include second sub-content, the first location may be a location between the first sub-content and the second sub-content, and the first reference content may further include the second sub-content. Optionally, in the content input into the first model, the first location information and the first task information are located between the first sub-content and the second sub-content.

Example 10: In an example, the first content may be text content shown in FIG. 10, the first sub-content may be "Hello, everyone! Today, I'm here to tell you all about the project we are about to launch! As we all know, this project is a huge undertaking." shown in FIG. 10 or the diagram (a) in FIG. 11, the second sub-content may be "Be as tough as those who built the Great Wall!" shown in FIG. 10 or the diagram (a) in FIG. 11, and the first location may be a location between the first sub-content and the second sub-content, namely, a location corresponding to an editing opinion "Briefly introduce the project" shown in the diagram (a) in FIG. 11. Correspondingly, the content input into the first model may be the multi-task prompt text shown in the diagram (b) in FIG. 11. The first location information includes two pieces of [/Prmpt<0>], and the first task information is <Briefly introduce the project>. In the multi-task prompt text, the first location information and the first task information are located between the first sub-content and the second sub-content.

In a third possible solution, the first content may include third sub-content, and the third sub-content is located at the first location. Alternatively, based on the first possible solution or the second possible solution, the first content may further include third sub-content, and the third sub-content is located at the first location (that is, the first location is a location at which the third sub-content is located). In this solution, second content specifically includes content obtained by the first model by executing the first processing task for the third sub-content based on the first reference content. In this solution, when there is substantive content at the first location in the first content (that is, the content is not empty), the content obtained by the first model by executing the first processing task at the first location based on the first reference content is content obtained by the first model by executing the first processing task for the substantive content at the first location based on the first reference content.

Example 11: In an example, the first content may be text content shown in FIG. 10, the third sub-content may be "Just like the lyrics of the song 'We Are Different': 'We are different. Everyone has different circumstances'" shown in FIG. 10, a location at which the third sub-content is located is the first location, the first sub-content may be a part or all of the text content located before the third sub-content shown in FIG. 10, and the second sub-content may be a part or all of the text content located after the third sub-content shown in FIG. 10.

In some embodiments of this application, the first location information may include start location information and end location information, the start location information indicates a start point of the first location, the end location information indicates an end point of the first location, and the third sub-content is located between the start point and the end point in the first content.

For example, in Example 9 or Example 10, the start location information in the first location information may be a 1^{st} piece of [/Prmpt<0>] (namely, [/Prmpt<0>] before [Briefly introduce the project]) shown in the diagram (b) in FIG. 11, and the end location information in the first location information may be a 2^{nd} piece of [/Prmpt<0>] (namely, [/Prmpt<0>] after [Briefly introduce the project]) shown in the diagram (b) in FIG. 11.

Optionally, in content input into the first model, the third sub-content may be located between the start location information and the end location information; and/or in the content input into the first model, the first task information may be before the start location information, or between the start location information and the third sub-content, or between the third sub-content and the end location information, or after the end location information.

For example, in Example 11, the content input into the first model is the multi-task prompt text shown in the diagram (b) in FIG. 11. In the multi-task prompt text, the third sub-content (namely, "Just like the lyrics of the song 'We Are Different': 'We are different. Everyone has different circumstances'") is located between the start location information (for example, [/Prmpt<4>) and the end location information (for example, [/Prmpt<4>]). The first task information (for example, <Change to an inspiring song>]) is located between the start location information and the third sub-content.

In some embodiments of this application, the first content may include at least one of the following: a text, an image, audio, a video, and code.

In a possible case, when the first content is a first image, the first location information is a semantic mask image corresponding to content at the first location in the first image. For example, the first content (the first image) may be an original image shown in FIG. 12, the first location may be a location at which a background is located in FIG. 12, the first location information may be a mask area 1 in a semantic mask image shown in FIG. 12, and the first task information may be an editing opinion 1 shown in FIG. 12. For another example, the first content (the first image) may be an original image shown in FIG. 12, the first location may be a location at which a person in the original image is located in FIG. 12, the first location information may be a mask area 2 in a semantic mask image shown in FIG. 12, and the first task information may be an editing opinion 2 shown in FIG. 12.

The semantic mask (semantic mask) image in this embodiment of this application is an image output, in a specific form, generated by a semantic segmentation model for the original image. Each pixel in the semantic mask image is marked as one of predefined categories. The semantic segmentation model may generate a multi-label feature map (namely, the semantic mask image) based on the original image. A value of each pixel in the feature map represents a label of a different object category. Based on the semantic segmentation model, objects may be accurately classified at a fine pixel level and a precise boundary may be drawn.

The following describes in detail a method for obtaining the first content, the first location information, and the first task information.

In a possible solution, the electronic device may be a server. In other words, a content display method provided in this embodiment of this application may be applied to the server. Optionally, the server may be a cloud server. In this scenario, the electronic device may receive the first content, the first location information, and the first task information from a terminal device, to obtain the first content, the first location information, and the first task information. For a method in which the terminal device obtains the first content, the first location information, and the first task information, refer to the foregoing or the following obtaining method used when the electronic device is a terminal device. Details are not described herein.

In another possible solution, the electronic device may be a terminal device. In other words, a content display method provided in this embodiment of this application may be applied to the terminal device. In this scenario, the electronic device may obtain the first content and first indication information, and then determine the first location information and the first task information based on the first content and the first indication information, to obtain the first content, the first location information, and the first task information. The first indication information indicates to execute the first processing task at the first location in the first content.

For example, the first content may be the original content in the foregoing embodiments, the first indication information may be the task indication information in the edited content in the foregoing embodiments, and the first content and the first indication information may form the edited content in the foregoing embodiments.

In an optional implementation, after obtaining the first content and the first indication information, and before determining the first location information and the first task information based on the first content and the first indication information, the electronic device may display the first content and the first indication information, and may receive a first operation. The first operation indicates to convert the first indication information into the first location information and the first task information based on the first content. The electronic device may determine the first location information and the first task information based on the first content and the first indication information in response to the received first operation. Optionally, after determining the first location information and the first task information based on the first content and the first indication information, the electronic device may display the first content, the first location information, and the first task information, so that a user views converted content to be input into the first model.

In some embodiments of this application, the electronic device may obtain the first content and the first indication information in any one of the following manners:
(1) Obtain and display the first content by using a first application, and determine the first indication information based on a received second operation performed on the first content.

The first application is an application installed in the electronic device. The first application may be configured to generate the first content, and may determine the first indication information based on an editing operation (namely, the second operation) performed by the user on the first content.

For example, the first application may be the first application in Method 1 in the content conversion control method in the foregoing embodiments, and the second operation may be the operation of editing the original content in Method 1 in the content conversion control method in the foregoing embodiments.

For an implementation of a specific embodiment process of this manner, refer to Method 1 in the content conversion control method in the foregoing embodiments. Details are not described herein again.

(2) Obtain, by using a first application, the first content and the first indication information that are indicated by a received third operation.

For example, the first application may be the second application in Method 2 in the content conversion control method in the foregoing embodiments, and the second operation may be the forwarding operation or the user operation in Method 2 in the content conversion control method in the foregoing embodiments.

For an implementation of a specific embodiment process of this manner, refer to Method 2 in the content conversion control method in the foregoing embodiments. Details are not described herein again.

(3) Receive, by using a first application, the first content and the first indication information that are sent by a second application, where the second application is used to generate the first content and the first indication information.

In an example, the first application may be the second application in Method 2 in the content conversion control method in the foregoing embodiments, the second application may be the first application in Method 2 in the content conversion control method in the foregoing embodiments, and a second operation may be the forwarding operation in Method 2 in the content conversion control method in the foregoing embodiments. For an implementation of a specific embodiment process of this manner, refer to Method 2 in the content conversion control method in the foregoing embodiments. Details are not described herein again.

In another example, the first application may be the third application in Method 3 in the content conversion control method in the foregoing embodiments, and the second application may be the second application in Method 3 in the content conversion control method in the foregoing embodiments. For an implementation of a specific embodiment process of this manner, refer to Method 3 in the content conversion control method in the foregoing embodiments. Details are not described herein again.

S 1702: The electronic device inputs the first content, the first location information, and the first task information into the first model, to determine the second content, where the second content includes content obtained by the first model by executing the first processing task at the first location based on the first reference content, and the first reference content includes a part or all of the first content other than the first location.

In some embodiments of this application, the first model is a generative artificial intelligence AI model.

For example, the first model may be the AI model in the foregoing embodiments.

The foregoing method provides a content processing method (that is, the first content includes a group of location information and task information (the group of location information is the first location information and the first task information)) in a single-task scenario. In a multi-task scenario, the first content may include a plurality of groups of location information and task information. Each group of location information and task information includes location information indicating a location in the first content and task information indicating a processing task that needs to be executed at the location. In the multi-task scenario, the electronic device may process the first content and the plurality of corresponding groups of location information and task information together by using the first model, to obtain a task processing result corresponding to each group of location information and task information.

Based on this, in a possible scenario, the electronic device may further obtain second location information and second task information based on the method for obtaining the first location information and the second location information. The second location information indicates a second location in the first content, and the second task information indicates to execute a second processing task at the second location. When inputting the first content, the first location information, and the first task information into the first model, the electronic device may simultaneously input the second location information and the second task information into the first model. In other words, the electronic device may simultaneously input the first content, the first location information, the first task information, the second location information, and the second task information into the first model for processing. Based on this, the second content obtained by the first model through processing not only includes the content obtained by the first model by executing the first processing task at the first location based on the first reference content, but also includes content obtained by the first model by executing the second processing task at the second location based on second reference content. The second reference content includes a part or all of the first content other than the second location. Certainly, the content input into the first model may include more groups of location information and task information. For an implementation of details, refer to the foregoing method. Details are not listed one by one in this embodiment of this application.

For the second location information, the second task information, the second reference information, and the like, refer to the foregoing descriptions of the first location information, the first task information, the second reference information, and the like. Details are not described herein again.

The following describes in detail a training process of the first model.

The training process of the first model may be performed before step S1702. In some embodiments of this application, the training process of the first model may include step 1 and step 2.

Step 1: The electronic device obtains training data, where the training data includes third content, third location information, third task information, and fourth content, the third location information indicates a third location in the third content, the third task information indicates to execute a third processing task at the third location, and the fourth content includes content obtained by executing the third processing task at the third location based on a part or all of the third content other than the third location.

In some embodiments of this application, when the first model serves as a model used in the single-task scenario, the training data may include the original content (namely, the third content), one group of location information and task information (namely, the third location information and the third task information), and a corresponding task processing result (namely, the fourth content).

In some embodiments of this application, when the first model serves as a model used in the multi-task scenario, the training data may include the original content, a plurality of groups of location information and task information, and a corresponding task processing result. Based on this, in a possible scenario, in addition to the third content (used as the original content), the third location information and the third task information (used as a group of location information and task information), and the fourth content, the training data may further include fourth location information and fourth task information (used as another group of location information and task information), and the fourth content further includes content obtained by executing a fourth processing task at a fourth location based on a part or all of the third content other than the fourth location. The fourth location information indicates the fourth location in the third content, and the fourth task information indicates to execute the fourth processing task at the fourth location. Certainly, the training data may include more groups of location information and task information, and a corresponding task processing result. For an implementation of details, refer to the foregoing method. Details are not listed in this embodiment of this application.

In some embodiments of this application, in the single-task scenario, the electronic device may obtain the training data in the method in steps A1 to A4.

A1: The electronic device obtains the third content and second indication information, where the second indication information indicates to execute the third processing task at the third location in the third content.

A2: The electronic device determines the third location information and the third task information based on the second indication information.

A3: The electronic device inputs the third content and the second indication information into a second model, to determine fifth content; or inputs the content at the third location in the third content and the second indication information into a second model, to determine fifth content; or when there is no substantial content at the third location, inputs the second indication information into a second model, to determine fifth content, where the fifth content includes content obtained by the second model by executing the third processing task based on input content.

The second model may be a generative AI model used in a conventional solution, for example, an existing generative AI model or a large language model.

For the third content, the second indication information, the third location information, and the third task information, respectively refer to the first content, the first indication information, the first location information, and the first task information in the foregoing embodiments. Details are not described herein again.

A4: The electronic device determines the fourth content based on the fifth content.

In an optional implementation, the electronic device may use the fifth content as the fourth content.

In another optional implementation, the electronic device may modify the fifth content in response to a received modification operation, to obtain the fourth content. The modification operation indicates to modify the fifth content to the fourth content. Based on the method, the fourth content obtained by the second model through processing may be corrected in a manual modification manner, to obtain the fifth content. In this way, accuracy of a task processing result can be ensured. When the fifth content is used as the training data, accuracy of the training data can be ensured, thereby improving model training effect.

In some embodiments of this application, in the multi-task scenario, the electronic device may obtain the training data in the method in steps B1 to B4.

B1: The electronic device obtains the third content, second indication information, and third indication information, where the second indication information indicates to execute a third processing task at a third location in the third content, and the third indication information indicates to execute a fourth processing task at a fourth location in the third content.

B2: The electronic device inputs the third content and the second indication information into a second model, to determine fifth content; or inputs the content at the third location in the third content and the second indication information into a second model, to determine fifth content; or inputs the second indication information into a second model, to determine fifth content, where the fifth content includes content obtained by the second model by executing the third processing task based on input content.

B3: The electronic device inputs the third content and the third indication information into the second model, to determine sixth content; or inputs the content at the fourth location in the third content and the third indication information into the second model, to determine sixth content; or inputs the third indication information into the second model, to determine sixth content, where the sixth content includes content obtained by the second model by executing the fourth processing task based on input content.

For an implementation of steps B1 to B3, refer to step A1 or A2. Details are not described herein again.

B4: The electronic device determines the fourth content based on the fifth content and the sixth content.

Specifically, the electronic device may use, as the fourth content, content obtained by combining seventh content determined based on the fifth content and eighth content determined based on the sixth content. The seventh content is the fifth content or content obtained by modifying the fifth content in response to a received operation. The eighth content is the sixth content or content obtained by modifying the sixth content in response to a received operation. For an implementation of details, refer to the foregoing method for determining the fourth content based on the fifth content. Details are not described herein again.

Step 2: The electronic device performs model training on a specified model based on the training data, to obtain the first model.

Specifically, the electronic device may input the training data obtained in the foregoing method into the specified model, to determine ninth content. In the single-task scenario, the ninth content includes content obtained by the specified model by executing the third processing task at the third location in the third content. In the multi-task scenario, the ninth content further includes content obtained by the specified model by executing the fourth processing task at the fourth location in the third content. After determining the ninth content, the electronic device may adjust the specified model based on the third content and the ninth content, to obtain the first model.

For example, the third content may be the single-task processing result/the multi-task processing result in the training data in the AI model training method in the foregoing embodiments, and the ninth content may be a processing result of the specified model in the AI model training method in the foregoing embodiments.

In the foregoing method, for specific steps performed by the electronic device, refer to the related descriptions in the foregoing embodiments. Details are not described herein again.

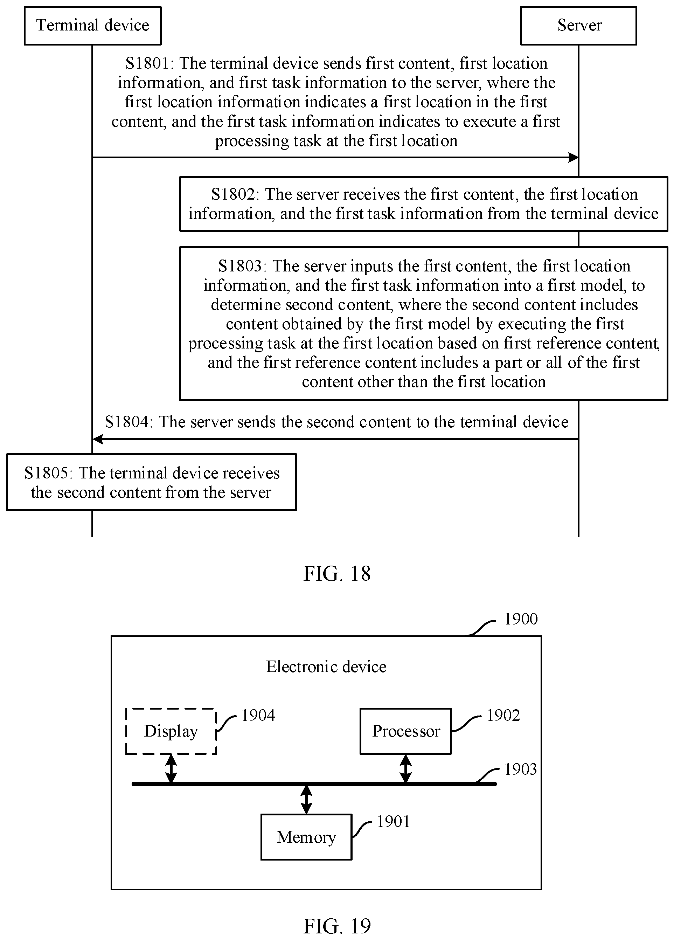

Based on the foregoing embodiments and same technical concepts, an embodiment of this application further provides a content processing method. The method may be applied to a content processing system including a server and a terminal device. As shown in FIG. 18, the method may include the following steps.

S1801: The terminal device sends first content, first location information, and first task information to the server, where the first location information indicates a first location in the first content, and the first task information indicates to execute a first processing task at the first location.

S1802: The server receives the first content, the first location information, and the first task information from the terminal device.

S1803: The server inputs the first content, the first location information, and the first task information into a first model, to determine second content, where the second content includes content obtained by the first model by executing the first processing task at the first location based on first reference content, and the first reference content includes a part or all of the first content other than the first location.

S1804: The server sends the second content to the terminal device.

S1805: The terminal device receives the second content from the server.

Optionally, the terminal device may be the terminal device shown in FIG. 4b, and the server may be the server shown in FIG. 4b. Steps in the method may be performed by the content processing system including the terminal device and the server shown in FIG. 4b. For a specific execution method, refer to related descriptions in the foregoing embodiments. Details are not described herein again.

In the foregoing method, for specific steps performed by the terminal device or the server, refer to the method for performing corresponding steps in the method shown in FIG. 17. Details are not described herein again.

Based on the foregoing embodiments and same technical concepts, an embodiment of this application further provides a content processing system. The content processing system may include a server and a terminal device. The terminal device is configured to send first content, first location information, and first task information to the server, where the first location information indicates a first location in the first content, and the first task information indicates to execute a first processing task at the first location; the server is configured to: receive the first content, the first location information, and the first task information from the terminal device; input the first content, the first location information, and the first task information into a first model, to determine second content, where the second content includes content obtained by the first model by executing the first processing task at the first location based on first reference content, and the first reference content includes a part or all of the first content other than the first location; and send the second content to the terminal device; and the terminal device is further configured to receive the second content from the server.

For specific functions of or methods performed by the terminal device and the server, refer to related descriptions in the foregoing embodiments. Details are not described herein again.

Based on the foregoing embodiments and same technical concepts, an embodiment of this application further provides an electronic device. The electronic device is configured to implement the content processing method that is applied to an electronic device, a server, or a terminal device and that is provided in embodiments of this application. As shown in FIG. 19, an electronic device 1900 may include a memory 1901, one or more processors 1902, and one or more computer programs (not shown in the figure). The components may be coupled through one or more communication buses 1903. Optionally, the electronic device 1900 may further include a display 1904.

The memory 1901 stores one or more computer programs (code), and the one or more computer programs include computer instructions. The one or more processors 1902 invoke the computer instructions stored in the memory 1901, so that the electronic device 1900 performs the content processing method that is applied to an electronic device, a server, or a terminal device and that is provided in embodiments of this application.

During specific implementation, the memory 1901 may include a high-speed random access memory, and may further include a nonvolatile memory like one or more disk storage devices, a flash device, or another nonvolatile solid-state storage device. The memory 1901 may store an operating system (which is briefly referred to as a system below), for example, an embedded operating system such as Android, iOS, Windows, or Linux. The memory 1901 may be configured to store an implementation program of embodiments of this application. The memory 1901 may further store a network communication program. The network communication program may be used for communication with one or more additional devices, one or more user equipments, or one or more network devices.

The one or more processors 1902 may be a general-purpose central processing unit (Central Processing Unit, CPU), a microprocessor, an application-specific integrated circuit (Application-Specific Integrated Circuit, ASIC), or one or more integrated circuits configured to control program execution of the solutions of this application.

The display 1904 is configured to display a related user interface such as an application interface.

It should be noted that FIG. 19 is merely an implementation of the electronic device 1900 provided in embodiments of this application. During actual application, the electronic device 1900 may further include more or fewer components. For details, refer to a specific structure and descriptions shown in FIG. 3. This is not limited herein.

Based on the foregoing embodiments and same concepts, an embodiment of this application further provides a computer-readable storage medium. The computer-readable storage medium stores a computer program. When the computer program is run on a computer, the computer is enabled to perform the method that is applied to an electronic device, a server, or a terminal device and that is provided in the foregoing embodiments.

Based on the foregoing embodiments and same concepts, an embodiment of this application further provides a computer program product. The computer program product includes a computer program or instructions. When the computer program or the instructions are run on a computer, the computer is enabled to perform the method that is applied to an electronic device, a server, or a terminal device and that is provided in the foregoing embodiments.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, a user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A content processing method, comprising:
obtaining first content, first location information, and first task information, wherein the first location information indicates a first location in the first content, and the first task information indicates to execute a first processing task at the first location; and
inputting the first content, the first location information, and the first task information into a first model, to determine second content, wherein the second content comprises content obtained by the first model by executing the first processing task at the first location based on first reference content, and the first reference content comprises a part or all of the first content other than the first location.

2. The method according to claim 1, wherein the first content comprises first sub-content, the first location is a location before or after the first sub-content, and the first reference content comprises the first sub-content.

3. The method according to claim 2, wherein the first content further comprises second sub-content, the first location is a location between the first sub-content and the second sub-content, and the first reference content further comprises the second sub-content.

4. The method according to any one of claims 1 to 3, wherein the first content comprises third sub-content, the third sub-content is located at the first location, and the second content specifically comprises content obtained by the first model by executing the first processing task for the third sub-content based on the first reference content.

5. The method according to claim 4, wherein the first location information comprises start location information and end location information, the start location information indicates a start point of the first location, the end location information indicates an end point of the first location, and the third sub-content is located between the start point and the end point in the first content.

6. The method according to claim 5, wherein
in content input into the first model, the third sub-content is located between the start location information and the end location information; and/or
in the content input into the first model, the first task information is located before the start location information, or between the start location information and the third sub-content, or between the third sub-content and the end location information, or after the end location information.

7. The method according to any one of claims 1 to 6, wherein the method is applied to a server, and obtaining the first content, the first location information, and the first task information comprises:
receiving the first content, the first location information, and the first task information from a terminal device.

8. The method according to any one of claims 1 to 6, wherein obtaining the first content, the first location information, and the first task information comprises:
obtaining the first content and first indication information, wherein the first indication information indicates to execute the first processing task at the first location in the first content; and
determining the first location information and the first task information based on the first content and the first indication information.

9. The method according to claim 8, wherein after obtaining the first content and the first indication information, and before determining the first location information and the first task information based on the first content and the first indication information, the method further comprises:
displaying the first content and the first indication information; and
receiving a first operation, wherein the first operation indicates to convert the first indication information into the first location information and the first task information based on the first content.

10. The method according to claim 8 or 9, wherein obtaining the first content and the first indication information comprises:
obtaining and displaying the first content by using a first application, and determining the first indication information based on a received second operation performed on the first content; or
obtaining, by using a first application, the first content and the first indication information that are indicated by a received third operation; or
receiving, by using a first application, the first content and the first indication information that are sent by a second application, wherein the second application is used to generate the first content and the first indication information.

11. The method according to any one of claims 8 to 10, wherein the method is applied to a terminal device.

12. The method according to any one of claims 1 to 11, wherein before inputting the first content, the first location information, and the first task information into the first model, to determine the second content, the method further comprises: obtaining second location information and second task information, wherein the second location information indicates a second location in the first content, and the second task information indicates to execute a second processing task at the second location;
when the first content, the first location information, and the first task information are input into the first model, the method further comprises: inputting the second location information and the second task information into the first model; and
the second content further comprises content obtained by the first model by executing the second processing task at the second location based on second reference content, and the second reference content comprises a part or all of the first content other than the second location.

13. The method according to any one of claims 1 to 12, wherein before inputting the first content, the first location information, and the first task information into the first model, to determine the second content, the method further comprises:
obtaining training data, wherein the training data comprises third content, third location information, third task information, and fourth content, the third location information indicates a third location in the third content, the third task information indicates to execute a third processing task at the third location, and the fourth content comprises content obtained by executing the third processing task at the third location based on a part or all of the third content other than the third location; and
performing model training on a specified model based on the training data, to obtain the first model.

14. The method according to claim 13, wherein the training data further comprises fourth location information and fourth task information, the fourth location information indicates a fourth location in the third content, and the fourth task information indicates to execute a fourth processing task at the fourth location; and
the fourth content further comprises content obtained by executing the fourth processing task at the fourth location based on a part or all of the third content other than the fourth location.

15. The method according to any one of claims 1 to 14, wherein the first content comprises at least one of the following: a text, an image, audio, a video, and code.

16. The method according to any one of claims 1 to 15, wherein when the first content is a first image, the first location information is a semantic mask image corresponding to the content at the first location in the first image.

17. A content processing system, comprising a terminal device and a server, wherein
the terminal device is configured to send first content, first location information, and first task information to the server, wherein the first location information indicates a first location in the first content, and the first task information indicates to execute a first processing task at the first location;
the server is configured to: receive the first content, the first location information, and the first task information from the terminal device; input the first content, the first location information, and the first task information into a first model, to determine second content, wherein the second content comprises content obtained by the first model by executing the first processing task at the first location based on first reference content, and the first reference content comprises a part or all of the first content other than the first location; and send the second content to the terminal device; and
the terminal device is further configured to receive the second content from the server.

18. The system according to claim 17, wherein the first content comprises first sub-content, the first location is a location before or after the first sub-content, and the first reference content comprises the first sub-content.

19. The system according to claim 18, wherein the first content further comprises second sub-content, the first location is a location between the first sub-content and the second sub-content, and the first reference content further comprises the second sub-content.

20. The system according to any one of claims 17 to 19, wherein the first content comprises third sub-content, the third sub-content is located at the first location, and the second content specifically comprises content obtained by the first model by executing the first processing task for the third sub-content based on the first reference content.

21. The system according to any one of claims 17 to 20, wherein the terminal device is further configured to:
before sending the first content, the first location information, and the first task information to the server, obtain the first content and first indication information, wherein the first indication information indicates to execute the first processing task at the first location in the first content; and
determine the first location information and the first task information based on the first content and the first indication information.

22. The system according to claim 21, wherein the terminal device is further configured to:
after obtaining the first content and the first indication information, and before determining the first location information and the first task information based on the first content and the first indication information, display the first content and the first indication information, and receive a first operation, wherein
the first operation indicates to convert the first indication information into the first location information and the first task information based on the first content.

23. The system according to claim 21 or 22, wherein when obtaining the first content and the first indication information, the terminal device is specifically configured to:
obtain and display the first content by using a first application, and determine the first indication information based on a received second operation performed on the first content; or
obtain, by using a first application, the first content and the first indication information that are indicated by a received third operation; or
receive, by using a first application, the first content and the first indication information that are sent by a second application, wherein the second application is used to generate the first content and the first indication information.

24. The system according to any one of claims 17 to 23, wherein the terminal device is further configured to:
receive the third operation before sending the first content, the first location information, and the first task information to the server, wherein
the third operation indicates to execute a processing task based on the first content, the first location information, and the first task information.

25. The system according to any one of claims 17 to 24, wherein the terminal device is further configured to send second location information and second task information to the server, wherein the second location information indicates a second location in the first content, and the second task information indicates to execute a second processing task at the second location;
the server is further configured to: when the first content, the first location information, and the first task information are input into the first model, input the second location information and the second task information into the first model; and
the second content further comprises content obtained by the first model by executing the second processing task at the second location based on second reference content, and the second reference content comprises a part or all of the first content other than the second location.

26. The system according to any one of claims 17 to 25, wherein the server is further configured to:
before inputting the first content, the first location information, and the first task information into the first model, to determine the second content, obtain training data, and perform model training on a specified model based on the training data, to obtain the first model, wherein
the training data comprises third content, third location information, third task information, and fourth content, the third location information indicates a third location in the third content, the third task information indicates to execute a third processing task at the third location, and the fourth content comprises content obtained by executing the third processing task at the third location based on a part or all of the third content other than the third location.

27. The system according to claim 26, wherein the training data further comprises fourth location information and fourth task information, the fourth location information indicates a fourth location in the third content, and the fourth task information indicates to execute a fourth processing task at the fourth location; and
the fourth content further comprises content obtained by executing the fourth processing task at the fourth location based on a part or all of the third content other than the fourth location.

28. An electronic device, wherein the electronic device comprises a memory and one or more processors; and
the memory is configured to store computer program code, the computer program code comprises computer instructions, and when the computer instructions are executed by the one or more processors, the electronic device is enabled to perform the method according to any one of claims 1 to 16.

29. A computer-readable storage medium, wherein the computer-readable storage medium stores a computer program, and when the computer program is run on an electronic device, the electronic device is enabled to perform the method according to any one of claims 1 to 16.

30. A computer program product, wherein the computer program product comprises a computer program or instructions, and when the computer program or the instructions are run on an electronic device, the electronic device is enabled to perform the method according to any one of claims 1 to 16.
